(19) Europäisches Patentamt
European Patent Office
Office européen des brevets

(11) **EP 3 900 095 B1**

(12) **EUROPÄISCHE PATENTSCHRIFT**

(45) Veröffentlichungstag und Bekanntmachung des Hinweises auf die Patenterteilung:
**26.04.2023   Patentblatt 2023/17**

(21) Anmeldenummer: **19835634.7**

(22) Anmeldetag: **17.12.2019**

(51) Internationale Patentklassifikation (IPC):
**H01M 8/18** (2006.01)    **B01D 63/10** (2006.01)

(52) Gemeinsame Patentklassifikation (CPC):
**H01M 8/18;** Y02E 60/50

(86) Internationale Anmeldenummer:
**PCT/EP2019/085567**

(87) Internationale Veröffentlichungsnummer:
**WO 2020/127207 (25.06.2020 Gazette 2020/26)**

(54) **GEWICKELTE REDOXFLOWBATTERIE**

WOUND REDOX FLOW BATTERY

BATTERIE ENROULÉE À FLUX D'OXYDORÉDUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2018   DE 102018132669**

(43) Veröffentlichungstag der Anmeldung:
**27.10.2021   Patentblatt 2021/43**

(73) Patentinhaber: **Spiraltec GmbH**
**74343 Sachsenheim (DE)**

(72) Erfinder: **WEIMER, Thomas**
**Sindelfingen 71065 (DE)**

(74) Vertreter: **RDL Patentanwälte PartG mbB**
**Senefelderstrasse 26**
**70176 Stuttgart (DE)**

(56) Entgegenhaltungen:
**WO-A1-91/11249          WO-A1-2017/001060**
**DE-A1-102015 010 083**

**Beschreibung**

**Technisches Gebiet**

Die vorliegende Erfindung betrifft eine gewickelte Redoxflowbatterie. Redoxflowbatterien sind elektrochemische Energiespeicher mit flüssigen Speichermedien. In Redoxflowbatterien ist das redoxaktive Material bzw. die redoxaktive Substanz in einem flüssigen Elektrolyt gelöst. Der Elektrolyt wird in Tanks gelagert und bei Bedarf einer zentralen Reaktionseinheit, der eigentlichen Redoxflowbatterie, für den Lade- oder Entladeprozess mittels Pumpen zugeführt. Beim Lade- und Entladeprozess werden die aktiven Materialien in der eigentlichen Redoxflowbatterie in getrennten Halbzellen oxidiert bzw. reduziert, wobei der Elektronenaustausch über die Elektroden und ein Ionenaustausch über eine die Halbzellen trennende ionenleitende Membran erfolgt.

**Beschreibung des Standes der Technik**

Im Vergleich zu anderen Akkumulatoren liegt bei Redoxflowbatterien eine aufwändigere Konstruktion vor, die neben Tank und Rohrleitungen mindestens zwei Pumpen für die Umwälzung der Elektrolyte, samt den dafür nötigen Steuer- und Kontrolleinrichtungen, benötigt. Somit muss auch die eigentliche Redoxflowbatterie Zu- und Abläufe für die Elektrolytlösungen besitzen. Neben dem prinzipiellen Aufbau der Batterie sind die eingesetzte Redoxchemie, die für die jeweilige Redoxchemie verwendeten protischen oder aprotischen Lösungsmittel, Membranen und Elektrodenmaterialien sowie der Aufbau der Systemumgebung charakteristisch für ein Redoxflowbatteriesystem. Die gelösten redoxaktiven Stoffe bzw. Substanzen werden in von der Zelle getrennten und beliebig groß ausgeführten Tanks gespeichert. Somit ist die gespeicherte Energiemenge nicht von der Zellengröße der Redoxflowbatterie abhängig. Die Zellenspannung ist durch die Nernst-Gleichung für jedes Redoxsystem gegeben und liegt bei praktisch realisierbaren Systemen bei 1 V bis 2,2 V, siehe hierzu bspw. https://de.wikipedia.org/wiki/Redox-Flow-Batterie.

Eine Übersicht über bisher beschriebene Redoxchemiesysteme findet man im Batterieforum Deutschland. Wichtige Kombinationen von redoxaktiven Substanzen, die in Redoxflowbatteriesystemen erprobt werden, sind u.a. Zn/Br, Zn/Luft, H2/Br, Fe/Fe, Cu/Cu, Vanadium/Vanadium und NaBr+Na2S4/Na2S2+NaBr3, siehe hierzu bspw. https://www.batterieforumdeutschland.de/infoportal/lexikon/redox-flow-batterien.

Dabei ist die Vanadium-Redox-Batterie eine besonders interessante Variante, da Vanadium in vier verschiedenen Wertigkeiten/Oxidationsstufen vorliegen kann und somit in beiden Halbzellen Vanadium verwendet werden kann. Durch ein sogenanntes Crossing-Over über die Membran in der zentralen Reaktionseinheit kann somit keine Verunreinigung erfolgen, siehe hierzu bspw. http://www.isea.rwth-aachen.de:80/eess/technology/redox-flow.

Weitere Typen sind beispielsweise Alkalimetallsysteme, organische Redoxpaare oder Komplexmetallsysteme. Eine Neuerung mit organischen Redoxpaaren stellte 2015 die Friedrich-Schiller-Universität in Jena vor. Eine Polymerbasierte Redoxflowbatterie (pRFB), die vollständig auf Metalle als Aktivmaterial verzichtet. Dieser neue Batterietyp setzt organische Polymere (ähnlich Plexiglas oder Styropor) ein, die eine redoxaktive Einheit bzw. Substanz tragen. Als Lösungsmittel werden keine korrosiven Säuren benötigt, eine einfache Kochsalzlösung ist ausreichend, siehe hierzu Tobias Janoschka, Norbert Martin, Udo Martin, Christian Friebe, Sabine Morgenstern, Hannes Hiller, Martin D. Hager, Ulrich S. Schubert, An aqueous, polymer-based redox-flow battery using non-corrosive, safe, and low-cost materials, Nature volume 527, pages 78-81 (2015).

Während des Lade- und Entladevorgangs in einer Redoxflowbatterie müssen für den Ladungsausgleich Ionen zwischen den Elektrolyten ausgetauscht werden. Unter Verwendung von Anionenaustauschermembranen können negativ geladene Ionen übertragen werden, unter Verwendung von Kationenaustauschermembranen positiv geladene Ionen. Bei stark unterschiedlichen Größen der Ionen kann auch eine selektive Ionenübertragung über eine Porenmembran erfolgen. Der Einsatz der wässrigen Polymerlösungen ermöglicht zum Beispiel die Nutzung von Dialysemembranen zur Trennung von Anode und Kathode, die wesentlich einfacher und günstiger herstellbar sind als klassische Ionentauschermembranen. All diese möglichen Membrantypen sind als Membranfolien verfügbar. Auch Mischtypen können eingesetzt werden.

Zur Erhöhung der Elektrodenoberfläche wird zumeist eine dichte Elektrode mit einem durchströmten leitfähigen Gitter oder Vlies elektrisch leitend kombiniert. Die Elektroden in Redoxflowbatterien sind in den meisten Fällen graphitbasiert. Neben einer ausreichenden Leitfähigkeit ist die chemische Resistenz gegenüber den reduzierenden und oxidierenden redoxaktiven Substanzen das zweite wichtige Auswahlkriterium für geeignete Elektroden.

Die Redoxreaktionen in der eigentlichen Batterie können sowohl in Einzelzellen erfolgen, als auch in brennstoffzellenähnlichen Energiewandlern, den sogenannten Stacks. Bei diesen "Zellstapeln" handelt es sich um hintereinander angeordnete elektrochemische Zellen. Die stacks sind in der Regel als sogenannte "Plate-and-Frame" Systeme konfiguriert, ähnlich den Brennstoffzellen. Bei einer elektrischen Reihenschaltung der Zellen zur Spannungserhöhung werden als Elektroden sogenannte Bipolarplatten zwischen den Zellen eingesetzt. Eine charakteristische Halbzelle im stack besteht somit üblicherweise aus Bipolarplatte + Graphitfilz, Durchflussrahmen und ionenleitender Membran. Es werden also bei konventionellen "Plate-and-Frame" Systemen Dichtrahmen zur Abdichtung der einzelnen von den Elektrolyten durchströmten Kammern benötigt. Um die Dichtigkeit zu gewährleisten sind hohe Anforderungen zu erfüllen, die im industriellen Maßstab mit hydraulischen Pressen, Verschweißungen oder Verklebungen realisiert werden. Zudem muss insbesondere bei einer üblichen Reihenschaltung sowohl eine gleichmäßige Durchströmung der einzelnen Zellen als auch innerhalb einer Zelle gewährleistet werden.

Ein schwerwiegendes Hemmnis für die weite Verbreitung der Redoxflowbatterie als effizientes Verfahren zur Stromspeicherung sind bis heute die resultierenden hohen Investitionskosten, die vor allem von den Stackkosten bestimmt werden. Die resultierende aufwändige Konstruktion der Module bezüglich der Strömungsführung und Dichtigkeit führen zu hohen Investitionskosten für den Batteriestack.

Von wenigen Ausnahmen abgesehen, sind alle bekannten Membrantrennverfahren erst mit der Überführung von einer Flachgeometrie in eine Hohlfaser- oder Rohrgeometrie industriell erfolgreich umgesetzt worden. Beispiele sind neben vielen anderen die Umkehrosmose, die Ultrafiltration, die Gastrennung, aber auch die Nierendialyse.

Für Li-Ionenakkumulatoren gibt es einen klaren Kostenvorteil für zylindrische Geometrien, siehe bspw. Energiespeicher-Roadmap, Fraunhofer ISI 2017, https://batterie-2020.de/wp-content/uploads/2018/01/batterie-2020.deenergiespeicher-roadmap-2017-energiespeicher-roadmap-dezember-2017.pdf.

In einem aktuellen Forschungsprojekt wird der Einsatz von Membranröhrchen mit einem Durchmesser < 5 mm in zylindrischen Redoxflowbatterien als Alternative zum Stackdesign untersucht, siehe bspw. http://forschungenergiespeicher.info/projektschau/versorgungsnetze/projekteinzelansicht//Energie_aus_der_Roehre/

Für die Redoxflowbatterien wurde eine gewickelte zylindrische Geometrie bislang nicht untersucht, da für die Gegenstromführung der Elektrolyten das Design der Elektroden, Zu- und Abläufe bisher als viel zu aufwändig gilt.

Der Anmelder Spiraltec GmbH produziert zylindrische Membranspiralwickelmodule für die Diffusionsdialyse zur Rückgewinnung von Säuren und Laugen, wie in EP000003317001A1 beschrieben. Dieser Membranwickel ermöglicht eine strikte Gegenstromführung in einer gewickelten, kostengünstig zu realisierenden Konstruktion.

## Zusammenfassung der Erfindung

Erfindungsgemäß wird eine Redoxflowbatterie mit mindestens einem gewickelten Redoxflowbatteriemodul bereitgestellt, das mindestens zwei durch Membranfolien getrennte Halbzellen aufweist, die jeweils von flüssigen Elektrolyten mit einer von zwei redoxaktiven Substanzen, die über eine Redoxreaktion wechselwirken, durchströmt werden. Die mindestens zwei getrennten Halbzellen des erfindungsgemäßen Redoxflowbatteriemoduls sind durch Aufwickeln von mindestens einem ersten Abschnitt mindestens einer Membranfolie, einem ersten Abschnitt mindestens einer ersten elektrisch leitenden Umlenkfolie, mindestens einem zweiten Abschnitt der mindestens einen Membranfolie, und einem zweiten Abschnitt mindestens einer zweiten elektrisch leitenden Umlenkfolie auf einen Zentralkörper gebildet, wobei durch mindestens einen Abstandshalter jeweils Strömungskanäle zwischen den Membranfolienabschnitten und Umlenkfolienabschnitten nach dem Aufwickeln gebildet werden.

Somit ist zwischen jeweils einem Abschnitt einer Membranfolie und jeweils einem Abschnitt einer Umlenkfolie ein Abstandshalter angeordnet, der die beiden Abschnitte voneinander beabstandet bzw. trennt und zwischen den beiden Abschnitten, d. h. dem Abschnitt der Membranfolie und dem Abschnitt der Umlenkfolie, jeweils Raum für einen Strömungskanal bildet bzw. bereitstellt. Beim Wickeln bzw. Aufwickeln der Abschnitte der Membranfolien und Umlenkfolien sowie der dazwischen angeordneten Abstandshalter werden die jeweiligen Abschnitte und Abstandshalter bspw. spiralförmig gewickelt und bspw. spiralförmige Strömungskanäle bereitgestellt.

Die Membranfolienabschnitte werden in Abhängigkeit von der Redoxchemie bzw. der Redoxreaktion und dem gewählten Lösungsmittel gewählt. Es können dichte Anionentauschermembranen oder Kationentauschermembranen sowie Porenmembranen zum Einsatz kommen. Auch eine beliebige Kombination dieser Membrantypen ist möglich.

Elektrisch leitende Flachfolien werden als elektrisch leitende Umlenkfolienabschnitte (nachfolgend vereinfachend auch als Umlenkfolien bezeichnet) eingesetzt und fungieren als Elektroden. Sie werden in den Halbzellen jeweils von einem Elektrolyt mit einer der beiden redoxaktiven Substanzen umströmt.

In einer Ausführungsform sind die Umlenkfolien, d. h. die mindestens eine erste Umlenkfolie und die mindestens eine zweite Umlenkfolie aus einer Verbindung (engl. Compound) aus Kohlenstoff und mindestens einem der Werkstoffe Polypropylen (PP), Polyethylen (PE), Polyvinylchlorid (PVC), Polyphenylenether (PPE), Polyphenylenoxid (PPO), Polyphenylensulfid (PPS), Polytetrafluorethylen (PTFE) oder Polyetheretherketon (PEEK ) gebildet.

In einer Ausführungsform besteht der Kohlenstoff in der Verbindung für die Umlenkfolien zumindest teilweise aus Graphit, und/oder Kohlenstoffnanoröhrchen und/oder Graphen.

Für das jeweilige Redoxsystem geeignete korrosionsresistente Elektroden können auch durch Beschichtung von handelsüblichen Metall- oder Polymerfolien als jeweilige Umlenkfolien hergestellt werden, wobei die Beschichtung Graphit, und/oder Graphen und/oder Kohlenstoffnanoröhrchen (C-tubes) enthält.

In einer Ausführungsform sind die dann als jeweilige Umlenkfolien dienenden zu beschichtenden Folien Polymerfolien aus mindestens einem der Werkstoffe Polypropylen (PP), Polyethylen (PE), Polyvinylchlorid (PVC), Polyphenylenether (PPE), Polyphenylenoxid (PPO), Polyphenylensulfid (PPS), Polytetrafluorethylen (PTFE) oder Polyether-therketon (PEEK).

In einer Ausführungsform sind die dann als jeweilige Umlenkfolien dienenden zu beschichtenden Folien Metallfolien aus mindestens einem der elektrisch leitenden Werkstoffe Silber, Kupfer oder Aluminium.

In Ausgestaltung erfolgt die Folienbeschichtung bzw. Beschichtung von Folien zur Bereitstellung der jeweiligen Umlenkfolien durch Bedrucken mit einer Tinte, die Graphit, und/oder Kohlenstoffnanoröhrchen und/oder Graphen enthält.

In einer Ausführungsform sind die Umlenkfolien zusätzlich mit elektrisch leitenden und katalytisch aktiven Substanzen beschichtet.

In einer Ausführungsform wird eine Strukturierung der Umlenkfolienoberfläche zur Oberflächenvergrößerung eingesetzt.

In einer Ausführungsform bildet eine Strukturierung der Umlenkfolienoberfläche die Abstandshalter, welche die Strömungskanäle für die Elektrolyten in den Halbzellen definieren.

In einer Ausführungsform sind die Abstandshalter zwischen jeweiliger Umlenkfolie und jeweiliger Membranfolie Filze, Vliese oder Papiere.

In einer Ausführungsform sind die Abstandshalter biplanare Gitter oder Gewebe.

In einer Ausführungsform sind die Abstandshalter aus mindestens einem der Werkstoffe Polypropylen (PP), Polyethylen (PE), Polyvinylchlorid (PVC), Polyphenylenether (PPE), Polyphenylenoxid (PPO), Polyphenylensulfid (PPS), Polytetrafluorethylen (PTFE) oder Polyetheretherketon (PEEK).

In einer Ausführungsform sind die Abstandshalter zusätzlich elektrisch leitfähig und/oder katalytisch beschichtet.

In einer Ausführungsform enthalten die Abstandshalter zumindest teilweise Graphit, und/oder Kohlenstoffnanoröhrchen und/oder Graphen oder sind zumindest teilweise beschichtet.

In einer Ausführungsform wird vor dem Einsatz der Abstandshalter in die Redoxflowbatterie eine Vorbehandlung der einzusetzenden Abstandshalter durchgeführt, wobei mit einer Pyrolyse freier und reaktiver Kohlenstoff in den Abstandshaltern erzeugt wird.

In einer Ausführungsform des erfindungsgemäß vorgesehenen Redoxflowbatteriemoduls sind die Abschnitte der jeweiligen Folien jeweils an mindestens einem Abdichtelement befestigt, das an dem Zentralkörper angebracht ist und die Abschnitte der jeweiligen Folien, d. h. der Umlenkfolien und der Membranfolien zum Abdichten zwischen dem jeweiligen mindestens einen Abdichtelement und dem Zentralkörper einspannt.

In einer Ausführungsform weist das erfindungsgemäß vorgesehene Redoxflowbatteriemodul elektrisch leitende Abdichtelemente für die Abschnitte der elektrisch leitenden Umlenkfolie auf, die mit den Abschnitten der elektrisch leitenden Umlenkfolie elektrisch leitend verbunden sind.

In einer Ausführungsform sind die elektrisch leitenden Abdichtelemente handelsübliche Rohre aus elektrisch leitfähigen Materialien.

In einer Ausführungsform enthalten die elektrisch leitenden Abdichtelemente mindestens einen der Werkstoffe Kupfer, Aluminium, Kohlenstoff in der Form von Graphit, und/oder Graphene und/oder Kohlenstoffnanoröhrchen.

In einer Ausführungsform bestehen die elektrisch leitenden Abdichtelemente aus einer Verbindung von Kohlenstoff und mindestens einem der Werkstoffe Polypropylen (PP), Polyethylen (PE), Polyvinylchlorid (PVC), Polyphenylenether (PPE), Polyphenylenoxid (PPO), Polyphenylensulfid (PPS), Polytetrafluorethylen (PTFE) oder Polyetheretherketon (PEEK) oder haben eine Beschichtung dieser Art.

In einer Ausführungsform weist das erfindungsgemäß vorgesehene Redoxflowbatteriemodul elektrisch isolierende Abdichtelemente für die Abschnitte der Membranfolie auf.

In einer Ausführungsform sind die elektrisch isolierenden Abdichtelemente Profile aus mindestens einem der Werkstoffe glasfaserverstärkter Kunststoff (GFK), Polypropylen (PP), Polyethylen (PE), Polyvinylchlorid (PVC), Polyphenylenether (PPE), Polyphenylenoxid (PPO), Polyphenylensulfid (PPS), Polytetrafluorethylen (PTFE) oder Polyetheretherketon (PEEK) oder Profile, die einen elektrisch isolierenden Überzug oder eine Beschichtung aus diesen Materialien aufweisen.

In einer Ausführungsform wird der Zentralkörper aus den elektrisch leitenden und elektrisch isolierenden Abdichtelementen gebildet, die miteinander verbunden werden, wobei Membranfolien- und Umlenkfolienabschnitte alternierend zwischen den Abdichtelementen angebracht werden.

In einer Ausführungsform ist der Zentralkörper ein Profil oder besteht aus mehreren Profilen und ist elektrisch isolierend.

In einer Ausführungsform ist der Zentralkörper aus mindestens einem der Werkstoffe glasfaserverstärkter Kunststoff (GFK), kohlefaserverstärkter Kunststoff (GFK), Polypropylen (PP), Polyethylen (PE), Polyvinylchlorid (PVC), Polyphenylenether (PPE), Polyphenylenoxid (PPO), Polyphenylensulfid (PPS), Polytetrafluorethylen (PTFE) oder Polyetheretherketon (PEEK) oder besitzt einen Überzug oder eine Beschichtung aus mindestens einem dieser Materialien.

In einer Ausführungsform des erfindungsgemäß vorgesehenen Redoxflowbatteriemoduls sind die Abdichtelemente der Membranfolienabschnitte und der elektrisch leitenden Umlenkfolienabschnitte abwechselnd an dem Zentralkörper befestigt oder bilden abwechselnd den Zentralkörper, und zwischen den Folien ist jeweils mindestens ein Abstandshalter angebracht, wodurch nach dem Aufwickeln die dann ausgebildeten Strömungskanäle im Wickel jeweils von einer Membranfolie und einer Umlenkfolie begrenzt sind.

In einer Ausführungsform weist das erfindungsgemäß vorgesehene Redoxflowbatteriemodul mindestens zwei Zulaufprofile und mindestens zwei Ablaufprofile auf, wobei Zulauf- und Ablaufprofile alternierend mit den Abdichtelementen der Membran- und Umlenkfolienabschnitte am Zentralkörper angeordnet sind.

In einer Ausführungsform sind die mindestens zwei Zulaufprofile und mindestens zwei Ablaufprofile aus mindestens einem der Werkstoffe glasfaserverstärktem Kunststoff (GFK), kohlefaserverstärktem Kunststoff (CFK) Polypropylen (PP), Polyethylen (PE), Polyvinylchlorid (PVC), Polyphenylenether (PPE), Polyphenylenoxid (PPO), Polyphenylensulfid (PPS), Polytetrafluorethylen (PTFE) oder Polyetheretherketon (PEEK) mit Austrittsöffnungen für die Elektrolyte entlang der Profilachse gebildet.

In einer Ausführungsform sind die mindestens zwei Zulaufprofile und mindestens zwei Ablaufprofile Gitterrohre.

In einer Ausführungsform werden die Abstandshalter zwischen den jeweiligen Folien, d. h. den Umlenkfolien und den Membranfolien zusammen mit den Zu- und Ablaufprofilen am Zentralkörper angeordnet.

In einer Ausführungsform des erfindungsgemäß vorgesehenen Redoxflowbatteriemoduls werden am Wickelende die mindestens zwei Abschnitte der Membranfolie am Wickelende dicht miteinander verbunden, wobei entweder der zwischen diesen Membranfolienabschnitten befindliche Umlenkfolienabschnitt davor so gekürzt wird, dass die Abstandshalter den zwischen den beiden verbundenen Membranfolienabschnitten strömenden Elektrolyt am Wickelende um die Umlenkfolie umlenken oder im Falle von Oberflächenstrukturierungen der Umlenkfolie als Abstandshalter die Umlenkfolie am Wickelende ausreichend für eine Strömungsumlenkung des Elektrolyten perforiert wird. Nach dem Verbinden der Membranfolienabschnitte wird der verbleibende nun am Wickelende außenliegende Umlenkfolienabschnitt auf der noch frei zugänglichen Oberfläche dieses Umlenkfolienabschnitts am Wickelende ebenfalls dicht angebracht, wobei die Abstandshalter über die am Wickelende verbundenen Membranfolienabschnitte hinausragen und somit den zwischen den beiden nun verbundenen Umlenkfolienabschnitten strömenden Elektrolyt am Wickelende um die verbundenen Membranfolienabschnitte umlenken. Man erhält somit zwei Strömungskanäle für die beiden Elektrolyte, die jeweils vom Zentralkörper zum Wickelende strömen, dort umgelenkt werden und wieder zum Zentralkörper zurückströmen.

In einer weiteren Ausführungsform des erfindungsgemäß vorgesehenen Redoxflowbatteriemoduls sind die Enden der Membranfolienabschnitte am äußeren Wickelende mechanisch miteinander verbunden und abgedichtet.

In einer weiteren Ausführungsform des erfindungsgemäß vorgesehenen Redoxflowbatteriemoduls sind die Enden der Membranfolienabschnitte am äußeren Wickelende durch eine gemeinsame Einwicklung und ein Klemmprofil aus Polypropylen (PP), Polyethylen (PE), Polyvinylchlorid (PVC), Polyphenylenether (PPE), Polyphenylenoxid (PPO), Polyphenylensulfid (PPS), Polytetrafluorethylen (PTFE) oder Polyetheretherketon (PEEK) mechanisch abgedichtet.

In einer weiteren Ausführungsform des erfindungsgemäß vorgesehenen Redoxflowbatteriemoduls sind die Enden der Membranfolienabschnitte verklebt.

In einer noch weiteren Ausführungsform des erfindungsgemäß vorgesehenen Redoxflowbatteriemoduls sind die Enden der Membranfolienabschnitte mit Butylkautschuk verklebt.

In einer weiteren Ausführungsform des erfindungsgemäß vorgesehenen Redoxflowbatteriemoduls sind die Enden der Membranfolienabschnitte verschweißt.

In einer Ausführungsform ist das erfindungsgemäß vorgesehene Redoxflowbatteriemodul bezogen auf eine Körperlängsachse des Zentralkörpers radial nach außen abgedichtet.

In einer Ausführungsform wird zur radialen Abdichtung das Ende des am Wickelende außenliegenden freien Umlenkfolienabschnitts auf dem Wickel verklebt.

In einer Ausführungsform wird zur radialen Abdichtung das Ende des am Wickelende außenliegenden freien Umlenkfolienabschnitts mit Butylkautschuk mit dem Wickel verklebt.

In einer Ausführungsform wird zur radialen Abdichtung das Ende des am Wickelende außenliegenden freien Umlenkfolienabschnitts mit dem Wickel verschweißt.

In einer Ausführungsform weist das erfindungsgemäß vorgesehene Redoxflowbatteriemodul über der äußeren Wicklung einen Folienschlauch auf, welcher sowohl den außenliegenden Umlenkfolienabschnitt am Wickelende mechanisch abdichtet als auch das gesamte Redoxflowbatteriemodul nach außen sicher abdichtet.

In einer Ausführungsform ist der außenliegende Umlenkfolienabschnitt am Wickelende verklebt oder verschweißt und ein Folienschlauch über der äußeren Wicklung dient als zusätzliche Sicherheit.

In einer Ausführungsform besteht der Folienschlauch zur Abdichtung am Wickelende aus einem der Materialien Polypropylen (PP), Polyethylen (PE), Polyvinylchlorid (PVC), Polyphenylenether (PPE), Polyphenylenoxid (PPO), Polyphenylensulfid (PPS), Polytetrafluorethylen (PTFE) oder Polyetheretherketon (PEEK).

In einer weiteren Ausführungsform des erfindungsgemäß vorgesehenen Redoxflowbatteriemoduls werden die Zu- und Ablaufprofile für die Elektrolyte derart definiert, dass ein reiner Gegenstrombetrieb ermöglicht wird. Der erste Elektrolyt umströmt den am Wickelende von den Membranfolienabschnitten eingeschlossen Umlenkfolienabschnitt in beliebiger Richtung. Wenn am Zentralkörper das Zu- und Ablaufprofil für den ersten Elektrolyt festgelegt wurde, wird von den beiden am Zentralkörper verbleibenden Profilen für den Zu- bzw. Ablauf das dem Zulaufprofil des ersten Elektrolyten benachbarte Profil als Ablaufprofil für den zweiten Elektrolyten festgelegt. Somit ist auch das Zulaufprofil für den zweiten Elektrolyten festgelegt.

In einer Ausführungsform des erfindungsgemäß vorgesehenen Redoxflowbatteriemoduls sind die Stirnseiten des Redoxflowbatteriemoduls mit einer Vergussmasse abgedichtet.

In einer weiteren Ausführungsform des erfindungsgemäß vorgesehenen Redoxflowbatteriemoduls besteht die Vergussmasse mindestens aus einer der Komponenten Epoxidharz, Polyurethanharz, Vinylesterharz, Silikon.

In einer Ausführungsform des erfindungsgemäß vorgesehenen Redoxflowbatteriemoduls werden nach dem Verguss die Zu-, Ablaufprofile und die Abdichtprofile der Umlenkfolien nach dem Verguss stirnseitig an mindestens einer der beiden Stirnseiten wieder geöffnet, zum Beispiel durch Bohrungen.

In einer weiteren Ausführungsform werden vor dem Verguss der Stirnseiten geeignete, d. h. chemisch resistente Fittinge, beispielsweise Doppelnippel aus Polypropylen, an mindestens einer Öffnung in den Stirnseiten für die Zu- und Ablaufprofile sowie Elektrodenanschlüsse an mindestens einer Öffnung für die Abdichtprofile der Umlenkfolien angebracht, wobei die Elektrodenanschlüsse mit den Abdichtprofilen der Umlenkfolien elektrisch leitend verbunden werden.

In einer weiteren Ausführungsform des erfindungsgemäß vorgesehenen Redoxflowbatteriemoduls werden vor dem Verguss der Stirnseiten die Fittinge an den Zu- und Ablaufprofilen so angebracht, dass diese stirnseitig aus dem Wickel herausragen und diese nach dem Verguss der Stirnseiten mit geeigneten Formen direkt von außen an den Stirnseiten zugänglich sind.

In einer weiteren Ausführungsform des erfindungsgemäß vorgesehenen Redoxflowbatteriemoduls werden vor dem Verguss der Stirnseiten Elektrodenmaterialien mit den Abdichtprofilen der Umlenkfolien derart elektrisch leitend verbunden, dass diese stirnseitig aus dem Wickel herausragen und somit nach dem Verguss der Stirnseiten mit geeigneten Formen und Abdichtungen die Elektroden direkt an den Stirnseiten zugänglich sind.

In einer weiteren Ausführungsform des erfindungsgemäß vorgesehenen Redoxflowbatteriemoduls werden vor dem Verguss der einen Stirnseite Fittinge an den Zu- und Ablaufprofilen an dieser Stirnseite so angebracht, dass diese stirnseitig aus dem Wickel herausragen und diese nach dem Verguss der einen Stirnseite mit geeigneten Formen direkt an dieser Stirnseite zugänglich sind, und vor dem Verguss der anderen Stirnseite Elektrodenmaterialien mit den Abdichtprofilen der Umlenkfolien elektrisch leitend derart verbunden sind, dass diese an der anderen Stirnseite aus dem Wickel herausragen und somit nach dem Verguss der anderen Stirnseite mit geeigneten Formen und Abdichtungen die Elektroden direkt an der anderen Stirnseite zugänglich sind.

In einer weiteren Ausführungsform des erfindungsgemäß vorgesehenen Redoxflowbatteriemoduls sind die Elektrodenmaterialien Graphitstäbe, Al- oder Cu-Profile.

Ferner betrifft die vorliegende Erfindung ein Verfahren zur Stromerzeugung mit in Fluiden gelösten redoxaktiven Substanzen unter Verwendung des erfindungsgemäß vorgesehenen Redoxflowbatteriemoduls, bei dem ein erstes Fluid in einen ersten Strömungskanal des gewickelten Redoxflowbatteriemoduls und ein zweites Fluid in einen zweiten Strömungskanal des gewickelten Redoxflowbatteriemoduls geleitet wird, wobei das erste Fluid und das zweite Fluid nach einem Gleichstrom- oder Gegenstromprinzip durch das Redoxflowbatteriemodul geleitet werden.

In einer Ausführungsform des vorgestellten Verfahrens ist vorgesehen, dass der erste Strömungskanal des Redoxflowbatteriemoduls zumindest bereichsweise, d. h. lediglich innerhalb eines ausgewählten Bereichs, auf einer ersten Seite von einer Ionenaustauschermembranfolie und auf einer zweiten Seite von einer ersten elektrisch leitenden Umlenkfolie begrenzt wird, und bei dem der zweite Strömungskanal zumindest bereichsweise auf einer ersten Seite von einer zweiten elektrisch leitenden Umlenkfolie und auf einer zweiten Seite von der Ionenaustauschermembranfolie begrenzt wird, wobei in dem ersten Strömungskanal und/oder in dem zweiten Strömungskanal ein Abstandshalter angeordnet wird.

In einer weiteren möglichen Ausführungsform des vorgestellten Verfahrens ist vorgesehen, dass das erste Fluid und das zweite Fluid an einem Ende des ersten Strömungskanals bzw. des zweiten Strömungskanals umgelenkt werden, wodurch jedes der beiden Fluide eine elektrisch leitende Umlenkfolie auf zwei Seiten umströmt und abhängig von den Konzentrationen der redoxaktiven Substanzen eine Elektronenübertragung zwischen dem ersten Strömungskanal und dem zweiten Strömungskanal über beide Oberflächen der elektrisch leitenden Umlenkfolien und eine Ionenübertragung durch die Membranfolie erfolgt.

In einer weiteren möglichen Ausführungsform des vorgestellten Verfahrens ist vorgesehen, dass zur Spannungserhöhung der Redoxflowbatterie auf eine gewünschte Betriebsspannung mehrere Redoxflowbatteriemodule elektrisch in Reihe geschaltet werden.

In einer weiteren möglichen Ausführungsform des vorgestellten Verfahrens ist vorgesehen, dass bei einer Reihenschaltung mehrerer Redoxflowbatteriemodule die Durchflüsse der Elektrolyte durch die einzelnen Redoxflowbatteriemodule mit Durchflussbegrenzern auf gleiche Volumenströme geregelt werden.

In weiterer Ausgestaltung werden mehrere Gruppen von in Reihe zueinander geschalteten Redoxflowbatteriemodulen parallel zueinander geschaltet.

**Kurzbeschreibung der Zeichnungen**

Figur 1 zeigt eine schematische Darstellung des Prinzips einer Ausführungsform der erfindungsgemäßen Redoxflowbatterie.

Figur 2 zeigt eine beispielhafte Ausführungsform des erfindungsgemäß vorgesehenen Redoxflowbatteriemoduls vor einer Aufwicklung.

Figur 3 zeigt eine weitere beispielhafte Ausführungsform des erfindungsgemäß vorgesehenen Redoxflowbatteriemoduls vor einer Aufwicklung.

Figur 4 zeigt einen Querschnitt durch eine Ausführungsform des erfindungsgemäß vorgesehenen Redoxflowbatteriemoduls.

Figur 5 zeigt einen Abschnitt an einem Ende einer Aufwicklung einer weiteren Ausführungsform des erfindungsgemäß vorgesehenen Redoxflowbatteriemoduls.

**Ausführliche Beschreibung**

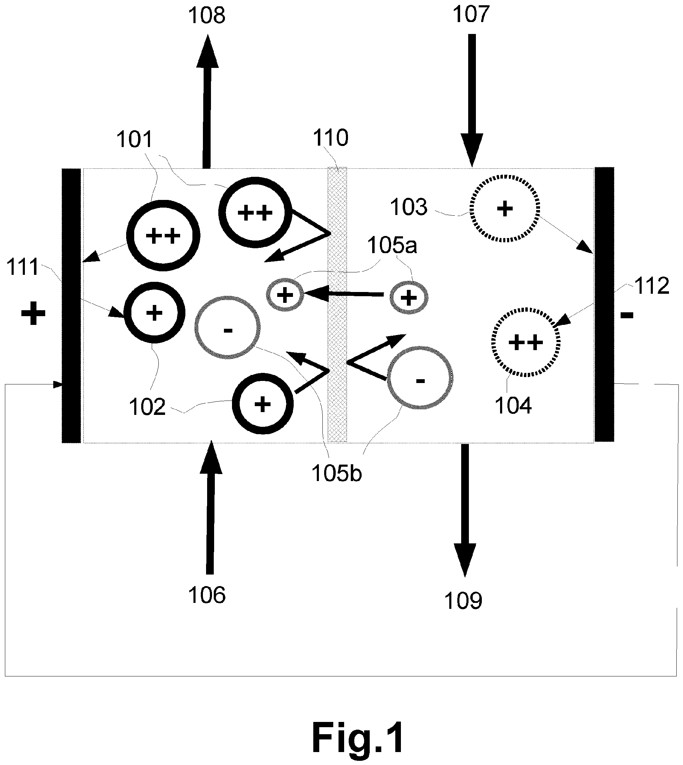

Figur 1 veranschaulicht das Prinzip der Redoxflowbatterie für einen idealisierten Entladevorgang. Ein Elektrolyt 106 mit einer redoxaktiven Substanz 101 strömt in eine erste von einer Elektrode 111 und einer protonleitenden Membran 110 begrenzte Kammer des Redoxflowbatteriemoduls. Ein Elektrolyt 107 mit einer redoxaktiven Substanz 103 strömt in eine andere von einer weiteren Elektrode 112 und der protonleitenden Membran 110 begrenzte Kammer des Redoxflowbatteriemoduls. Beide Elektrolyte enthalten zudem Protonen 105a und Anionen 105b, welche nicht redoxaktiv sind. Beim Entladen wird nun die redoxaktive Substanz 101 an der Elektrode 111 unter Aufnahme von mindestens einem Elektron zur Substanz 102 reduziert, und die redoxaktive Substanz 103 an der Elektrode 112 unter Abgabe von mindestens einem Elektron zur Substanz 104 oxidiert. Die Elektronen strömen über einen nicht eingezeichneten Verbraucher von der Elektrode 112, im Redoxflowbatteriemodul gebildet durch eine erste Umlenkfolie, zur Elektrode 111, im Redoxflowbatteriemodul gebildet durch eine zweite Umlenkfolie. Der Stromkreis wird durch den Transport von Protonen 105a durch die selektiv leitende Membran 110 bzw. im Redoxflowbatteriemodul durch eine selektiv leitende Membranfolie 110 geschlossen. Alternativ könnte der Stromkreis auch durch einen selektiven Transport der Anionen 105b durch die Membran 110 geschlossen werden.

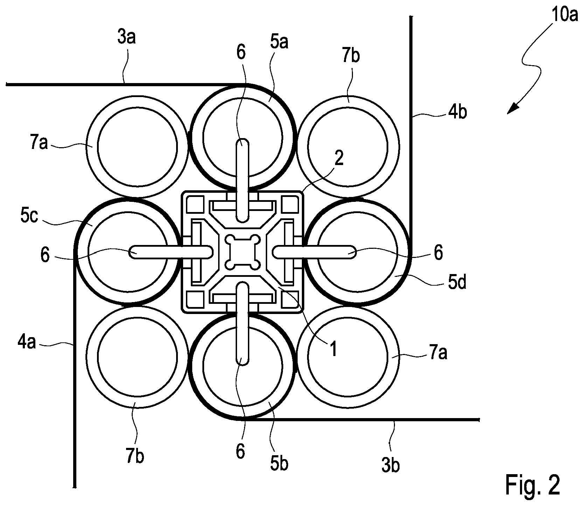

In Figur 2 wird ein gewickeltes Redoxflowbatteriemodul 10a gezeigt. Die Ansicht der Figur 2 zeigt eine Draufsicht oder Querschnittsansicht des Redoxflowbatteriemoduls 10a wie es sich beim Beginn des Aufwickelns darstellt. Eine Körperachse des Redoxflowbatteriemoduls 10a erstreckt sich aus der Sichtebene heraus. Das erfindungsgemäße Redoxflowbatteriemodul 10a bildet somit einen länglichen Hohlkörper. Mit einer solchen Anordnung des Redoxflowbatteriemoduls 10a lässt sich sowohl ein Gleichstrom- als auch ein Gegenstrombetrieb realisieren. Das erfindungsgemäße Redoxflowbatteriemodul 10a weist einen Zentralkörper 1 auf. In der in der Figur 2 gezeigten Ausführungsform ist der Zentralkörper 1 ein Profil mit einem im Wesentlichen viereckigen Querschnitt. Der Zentralkörper 1 ist gegen Angriffe der Säure und/oder der Lauge mit einem säure- und/oder laugenresistenten Material geschützt. Ein solches Material kann beispielsweise Polypropylen (PP), Polyethylen (PE), Polyvinylchlorid (PVC), Polyphenylenether (PPE), Polyphenylenoxid (PPO), Polyphenylensulfid (PPS), Polytetrafluorethylen (PTFE) oder Polyetheretherketon (PEEK) sein. Alternativ könnte als Zentralkörper ein Profil aus einem faserverstärkten Kunststoff (GFK, CFK) verwendet werden. Es ist vorteilhaft, den Zentralkörper an seiner axialen Oberfläche elektrisch isolierend auszuführen.

Um den Zentralkörper 1 ist eine Mehrzahl an Profilen 5a bis 5d, 7a, 7b angeordnet. An einem ersten Abdichtelement 5a ist eine erste Membranfolie befestigt, die einen ersten Abschnitt 3a aufweist. An einem zweiten Abdichtelement 5b ist eine zweite Membranfolie befestigt, die einen zweiten Abschnitt 3b aufweist. Beispielsweise kann eine kommerzielle Ionenaustauschermembranfolie der Firma Fumatech BWT GmbH verwendet werden. In der in Figur 2 gezeigten Ausführungsform des erfindungsgemäßen Redoxflowbatteriemoduls 10a sind die Abdichtelemente 5a, 5b als Rohre bzw. Spannrohre ausgebildet, die den ersten Abschnitt 3a und den zweiten Abschnitt 3b zwischen den Spannrohren 5a, 5b und dem Zentralkörper 1 einspannen. Insbesondere in der in Figur 2 gezeigten Ausführungsform ist das zweite Abdichtelement 5b gegenüber dem ersten Abdichtelement 5a angeordnet.

Das erste und das zweite Abdichtelement 5a, 5b sind an dem Zentralkörper 1 mittels Spannelementen 6 befestigt. Spannelemente 6 sind beispielsweise Federstifte, die das Abdichtelement 5a, 5b in Richtung des Zentralkörpers 1 ziehen. Zum Abdichten sind der erste Abschnitt 3a und der zweite Abschnitt 3b jeweils zwischen dem jeweiligen Abdichtelement 5a, 5b und dem Zentralköper 1 eingespannt. Dazu können der erste und der zweite Abschnitt 3a, 3b jeweils mehrmals um das jeweilige Abdichtelement 5a, 5b gewickelt werden. Zur Verbesserung der Dichtigkeit können die Abdichtelemente 5a, 5b zusätzlich auf den Zentralkörper 1 oder dessen Schutzüberzug geklebt werden. Eine besonders geeignete Maßnahme ist ein Verkleben mit Butylkautschuk.

Die Abdichtelemente bzw. Spannrohre 5a und 5b können aus Metall sein. In diesem Fall sind die Spannrohre 5a und 5b mit einem resistenten Material, wie beispielsweise einem PP-Schrumpfschlauch überzogen.

In der gezeigten Ausführungsform sind im Wesentlichen um einen 90 Grad Winkel versetzt, ein drittes und ein viertes Abdichtelement 5c, 5d an dem Zentralkörper 1 mittels Spannelementen 6 befestigt. Diese Abdichtelemente dienen gleichzeitig als Elektroden für das Redoxflowbatteriemodul. Zur Erzielung einer hohen Stromausbeute ist die Ausführung als dickwandige Kupferprofile oder kohlenstoffhaltige Profile besonders vorteilhaft. Auch das dritte und vierte Abdichtelement 5c, 5d sind in der in Figur 2 gezeigten Ausführungsform als Spannrohre 5c, 5d ausgebildet.

An dem dritten Abdichtelement 5c ist eine erste elektrisch leitende Umlenkfolie 4a angebracht. Die erste Umlenkfolie 4a ist zwischen dem dritten Abdichtelement 5c und dem Zentralkörper 1 eingespannt. An dem vierten Abdichtelement 5d ist eine zweite elektrisch leitende Umlenkfolie 4b angebracht, die zwischen dem vierten Abdichtelement 5d und dem Zentralkörper 1 eingespannt ist.

Es ist darauf zu achten, den elektrischen Widerstand zwischen den Elektroden 5c, 5d und den elektrisch leitenden Umlenkfolien so gering wie möglich zu halten. Im Fall von metallischen Umlenkfolien 4a, 4b, insbesondere bei Verwendung von Kupferfolien in Kombination mit Kupferrohren 5c, 5d kann die Umlenkfolie 4a mit der Elektrode 5c und die Umlenkfolie 4b mit der Elektrode 5d am Folienanfang verlötet werden.

Der erste und der zweite Abschnitt 4a, 4b der jeweiligen Umlenkfolien können jeweils mehrmals um das jeweilige Abdichtelement 5c, 5d gewickelt werden. Zur Verbesserung der Dichtigkeit können die Abdichtelemente 5a, 5b zusätzlich auf den Zentralkörper 1 oder dessen Schutzüberzug geklebt werden. Eine besonders geeignete Maßnahme ist ein Verkleben mit Butylkautschuk. Hierdurch wird auch die notwendige elektrische Isolation erreicht.

Die erste und die zweite Umlenkfolie 4a, 4b sind für den jeweiligen das Redoxflowbatteriemodul 10a mit direktem Kontakt zu den jeweiligen Umlenkfolie durchströmenden Elektrolyten undurchlässig, an der Folienoberfläche chemisch resistent gegen alle im Kontakt mit der jeweiligen Umlenkfolie befindlichen Substanzen und besitzen eine hohe elektrische Leitfähigkeit.

Geeignete elektrisch leitende Umlenkfolien 4a und 4b enthalten mindestens einen der Werkstoffe Kupfer, Aluminium, Kohlenstoff in der Form von Graphit, und/oder Graphen und/oder Kohlenstoffnanoröhrchen. Metallische Umlenkfolien haben eine an allen Oberflächen mit Kontakt zum Elektrolyten chemisch resistente und leitfähige Beschichtung. Die Umlenkfolien 4a, 4b können bspw. eine Dicke von ungefähr 10 Mikrometer bis 1000 Mikrometer aufweisen.

Insbesondere in der in Figur 2 gezeigten Ausführungsform ist das dritte Abdichtelement 5c gegenüber dem vierten Abdichtelement 5d angeordnet. Somit sind jeweils das erste und zweite Abdichtelement 5a, 5b und das dritte und vierte Abdichtelement 5c, 5d einander gegenüberliegend angeordnet. Es sind jedoch auch Ausführungsformen vorstellbar, bei denen die jeweiligen Abdichtelemente einen Versatz zueinander aufweisen.

Die Spannelemente 6 ziehen die Spannrohre 5a bis 5d jeweils in Richtung des Zentralkörpers 1, um die jeweiligen Folien 3a, 3b, 4a, 4b zwischen dem jeweiligen Spannrohr 5a bis 5d und dem Zentralkörper 1 einzuspannen. Als Spannelemente 6 können beispielsweise Federsplinte verwendet werden, die in geeignete Bohrungen an jeweiligen Rohrenden der Spannrohre 5a bis 5d bzw. des Zentralkörpers 1 eingeführt sind. Zusätzlich wird über die Einspannung eine Dichtung erzielt, so dass zwischen den Spannrohren 5a bis 5d und dem Zentralkörper 1 kein Elektrolyt hindurchtritt. Werden elektrisch leitende Spannstifte 6 für die Befestigung der Elektroden 5c und 5d an einem elektrisch leitenden Zentralkörper 1 verwendet, so muss mindestens an einer Elektrode ein Isolationsmaterial zwischen Spannstift und Elektrode eingelegt werden.

Die Spannrohre 5a bis 5d können in das den Zentralkörper 1 schützende Material eindringen, um eine Dichtfläche zu erhöhen und die Dichtung zu verbessern. Metallprofile, wie das in der Ausführungsform in Figur 2 verwendete Aluminiumprofil (bspw. der Firma Bosch-Rexroth) haben eine höhere Steifigkeit als Rohre bzw. Profile aus einem Polymermaterial und sind daher zur Übertragung von Anpresskräften bis in eine Wickelmitte als Abdichtelemente bzw. Spannrohre 5a bis 5d vorzuziehen. Das in Figur 2 verwendete Aluminiumprofil als Zentralkörper weist beispielsweise eine Kantenlänge von 30 Millimeter und eine Länge von 25 Zentimeter auf. Zwischen den Spannrohren 5a bis 5d, die beispielsweise einen Durchmesser von ungefähr 10 - 25 mm aufweisen, sind alternierend jeweils ein Zulaufrohr 7a und ein Ablaufrohr 7b angeordnet. Die Zulauf- bzw. Ablaufrohre 7a, 7b sind beispielsweise Gitterrohre mit einem Durchmesser von 10 - 25 mm und weisen über ihren Umfang verteilt Öffnungen auf, damit auf ihre Längsachse bezogen radial Elektrolyt ein- bzw. austreten kann. In Figur 2 befindet sich also links neben dem ersten Spannrohr 5a, an dem die Membranfolie mit dem ersten Abschnitt 3a angebracht ist, ein erstes Zulaufrohr 7a. Neben dem ersten Zulaufrohr 7a befindet sich das Spannrohr 5c, an dem die erste Umlenkfolie 4a bzw. ein Abschnitt der ersten Umlenkfolie 4a angebracht ist. Daneben befindet sich ein erstes Ablaufrohr 7b. Neben dem ersten Ablaufrohr 7b befindet sich das zweite Spannrohr 5b, an dem die Membranfolie mit dem zweiten Abschnitt 3b angebracht ist. Neben dem zweiten Spannrohr 5b befindet sich ein zweites Zulaufrohr 7a und daneben das vierte Spannrohr 5d, an dem die zweite Umlenkfolie 4b bzw. ein Abschnitt der zweiten Umlenkfolie 4b angebracht ist. Neben dem vierten Spannrohr 5d befindet sich ein zweites Ablaufrohr 7b. Neben dem zweiten Ablaufrohr 7b befindet sich wieder das erste Spannrohr 5a. Das erfindungsgemäße Redoxflowbatteriemodul 10a weist also mindestens zwei Zulaufrohre 7a und mindestens zwei Ablaufrohre 7b auf.

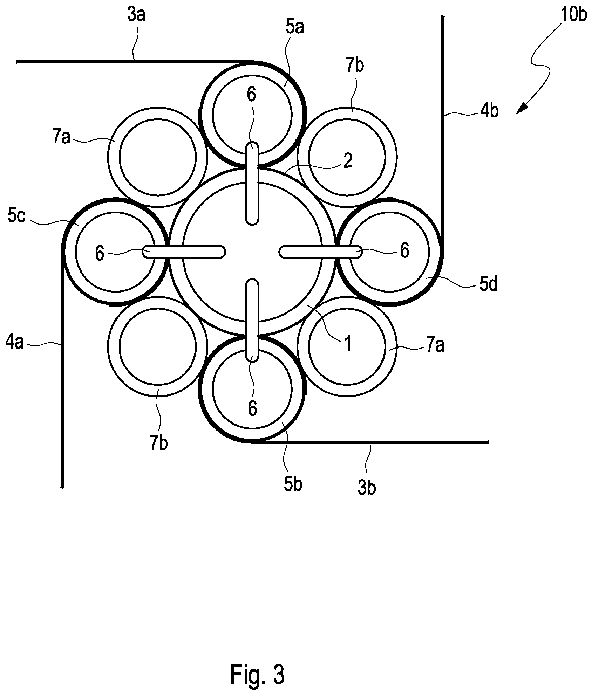

Figur 3 zeigt im Wesentlichen den Aufbau eines erfindungsgemäßen Redoxflowbatteriemoduls 10b, wie er aus Figur 2 ersichtlich ist. In Figur 3 ist lediglich der Zentralkörper 1 durch einen länglichen Hohlkörper mit rundem Querschnitt gebildet, anstatt durch ein im Wesentlichen viereckiges Profil.

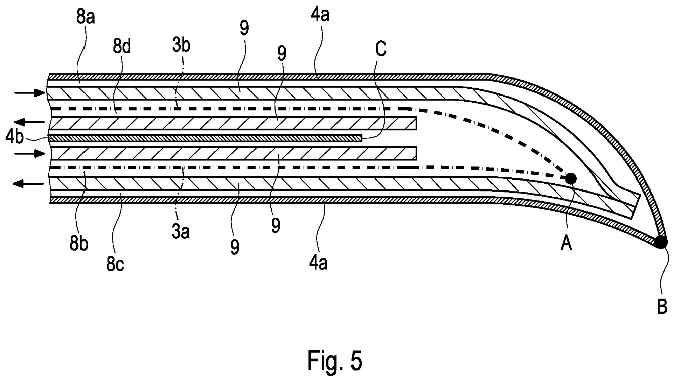

In einer nicht gezeigten alternativen Ausführungsform ist es vorstellbar, dass der Zentralkörper 1 eine erste Hälfte 5a aufweist, die mit einer zweiten Hälfte 5b verbunden ist, wobei zwischen der einen ersten Hälfte und der einen zweiten Hälfte eine Membranfolie 3 eingespannt ist, die einen ersten und einen zweiten Abschnitt 3a, 3b aufweist. Auch die Zu- und Abläufe für die Elektrolyte 7a, 7b können bereits in jede Hälfte 5a, 5b integriert sein. Auf jeder Hälfte 5a, 5b müssen dann nur noch zusätzlich die Elektroden 5c, 5d mit den elektrisch leitenden Umlenkfolien 4a und 4b und gegebenenfalls die Abstandshalter 9 (siehe Figur 5) angebracht werden.

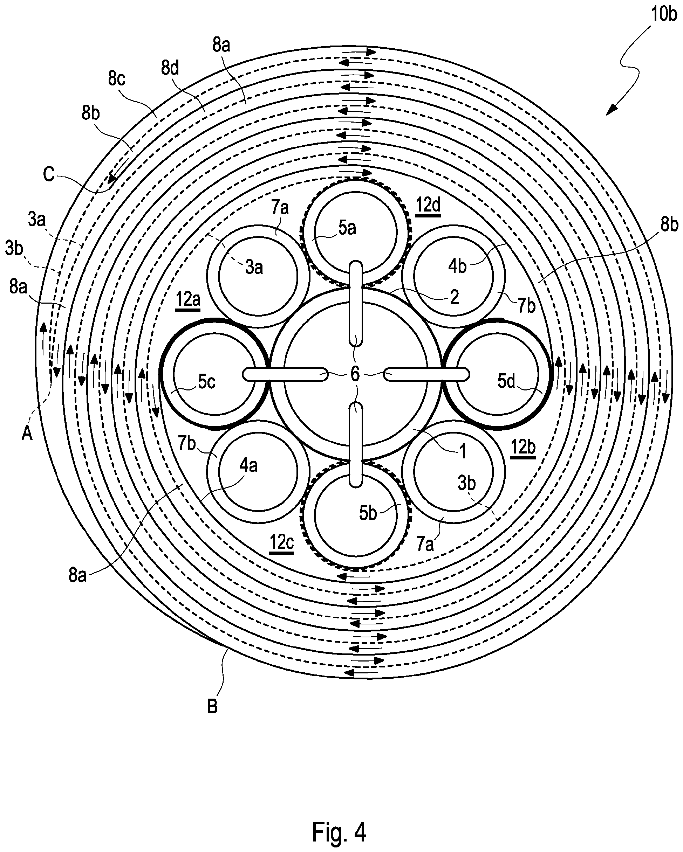

Während die Figuren 2 und 3 den Bereich des erfindungsgemäßen Redoxflowbatteriemoduls 10a, 10b um den Zentralkörper 1 vor dem Aufwickeln zeigen, zeigt Figur 4 eine Querschnittsansicht durch ein erfindungsgemäßes gewickeltes Redoxflowbatteriemodul 10b. Die zuvor genannten ersten und zweiten Abschnitte 3a, 3b der Membranfolien und die jeweiligen Abschnitte der ersten und der zweiten Umlenkfolie 4a, 4b sind gemeinsam um die um den Zentralkörper 1 angeordneten Abdichtelemente und Rohre 5a bis 5d, 7a, 7b gewickelt. Durch das Wickeln der Folien um den Zentralkörper 1 und Vorsehen von jeweiligen, hier nicht gezeigten, zwischen den jeweiligen Folien 3a, 3b, 4a, 4b verlaufenden Abstandshaltern 9 bilden sich zwischen den Membranfolien bzw. den Abschnitten der Membranfolie 3a, 3b und den Umlenkfolien 4a, 4b mindestens vier Strömungskanäle 8a, 8b, 8c, 8d aus. Die Strömungskanäle 8a, 8b, 8c, 8d verlaufen spiralförmig um den Zentralkörper 1. Hierbei ist vorgesehen, dass zwischen jeweils benachbarten Folien 3a, 3b, 4a, 4b bzw. zwischen benachbarten Abschnitten jeweils einer Membranfolie 3a, 3b und einer Umlenkfolie 4a, 4b jeweils ein Abstandshalter 9 angeordnet ist bzw. wird. Die spiralförmigen Strömungskanäle 8a, 8b, 8c, 8d werden beim Wickeln der Folien 3a, 3b, 4a, 4b bzw. der Abschnitte der Folien 3a, 3b, 4a, 4b aufgrund der dazwischen angeordneten Abstandshalter 9 gebildet.

Die in Figur 4 nicht gezeigten Abstandshalter 9 (Figur 5) sind an den Zulaufrohren 7a und an den Ablaufrohren 7b angebracht.

Die Abstandshalter 9 sind im einfachsten Fall biplanare Strömungsgitter, beispielsweise der Firma Tenax (Modell TENAX OS 050). Elektrisch leitfähige Abstandshalter erhöhen die Leistung der Redoxflowbatterie signifikant. Beispielsweise werden von den Firmen SGL Carbon und Freudenberg kohlenstoffhaltige Vliese für diesen Zweck angeboten. Die Abstandshalter 9 beabstanden die jeweilige Membranfolie 3a, 3b von der entsprechenden jeweiligen Umlenkfolie 4a, 4b, so dass die Strömungskanäle 8a, 8b, 8c, 8d sich in geeigneter Weise dazwischen ausbilden. In den Strömungskanälen 8a, 8b, 8c, 8d strömt jeweils in Umfangsrichtung ein Elektrolyt. Die Strömungsrichtung in den Strömungskanälen 8a, 8b, 8c, 8d ist in Figur 4 durch Pfeile angedeutet. Die Strömungskanäle 8a, 8b, 8c, 8d sind durch mindestens eine Membranfolie 3a, 3b, mindestens eine Umlenkfolie 4a, 4b (die jeweiligen Abstandshalter 9 bzw. Strömungsgitter) und den Zentralkörper 1 begrenzt. Die Zulaufrohre 7a und Ablaufrohre 7b (sowie die Strömungsgitter 9) werden durch das Aufwickeln der Folien 3a, 3b, 4a, 4b in ihrer Lage an dem Zentralkörper 1 fixiert. Die Länge und Breite der gewickelten Folien ergeben sich aus deren Materialeigenschaften und der gewählten Redoxflowchemie, d. h. der redoxaktiven Substanzen bzw. der Redoxreaktion, und der gewünschten Batterieleistung.

Die Zuläufe 7a und Abläufe 7b werden so gewählt, dass jeder der beiden Elektrolyten mit redoxaktiven Substanzen eine elektrisch leitende Umlenkfolie umströmt. In Figur 4 ist dies für einen Gegenstrombetrieb dargestellt. Der erste Elektrolyt strömt im Einströmgebiet 12a in den Wickel, im Kanal 8a nach außen, wird um den Punkt A umgelenkt und strömt im Kanal 8c zum Ausströmgebiet 12c zurück. Somit kann die erste Redoxteilreaktion während des ganzen Strömungsweges immer am Umlenkfolienabschnitt 4a stattfinden, und der Ionenaustausch mit dem zweiten Elektrolyt erfolgt während der Strömung nach au-β en über den Membranfolienabschnitt 3a und nach der Umlenkung über den Membranfolienabschnitt 3b. Der zweite Elektrolyt umströmt den Umlenkfolienabschnitt 4b vom Einströmgebiet 12b zum Punkt C, wird um diesen umgelenkt und zurück zum Ausströmgebiet 12d, so dass an diesem die zweite Redoxteilreaktion stattfinden kann.

Wird für den zweiten Elektrolyt die Strömung umgekehrt, also 12b zum Ausströmgebiet und 12d zum Einströmgebiet, so kann auch ein Gleichstrombetrieb erfolgen.

Figur 5 zeigt das Wickelende des Wickels aus Figur 4, also den Abschnitt um die Punkte A, B und C in Figur 4. Die Wicklung wird von der Umlenkfolie 4a begrenzt, die auch den Strömungskanal 8a und 8c begrenzt. Die Abstandshalter 9 bzw. Strömungsgitter in dem Strömungskanal 8a und 8c sind im Bereich des Punkts B auf eine gleiche Länge wie die Membranfolien 3a, 3b gekürzt, so dass ein direkter Kontakt zwischen den Strömungsgittern 9 und den Membranfolien 3a, 3b auf einer Länge von 10 cm bis 20 cm entsteht. Dieser Kontakt wird durch Aufwickeln der Membranfolien 3a, 3b verwirklicht. Die Enden der Membranfolien 3a, 3b sind auf eine gleiche Länge gekürzt und länger als die zweite Umlenkfolie 4b und die Strömungsgitter 9 in dem Strömungskanal 8b, 8d geschnitten. Zum Abdichten des Strömungskanals 8b, 8d sind die Enden der Membranfolien 3a, 3b verbunden. Dies kann durch eine Verklebung, z. B. mit Butylkautschuk oder eine Verschweißung erfolgen. Die Enden können auch zusammen aufgewickelt werden, wodurch eine mechanische Dichtung entsteht. Um die Dichtwirkung zu verbessern, können die Membranfolien 3a, 3b gemeinsam mehrfach auf ein erstes Profil gewickelt werden, das zum Schutz gegen die Elektrolyte mit beispielsweise einem PP-Schrumpfschlauch überzogen sein kann. Diese Dichtung kann zwischen ein Klemmprofil geklemmt sein, wodurch eine besonders gute Dichtung und ein sicherer Abschluss des Strömungskanals 8b, 8d entsteht. Der radiale äußere Abschluss des Redoxflowbatteriemoduls 10a, 10b wird, wie bereits erwähnt, durch eine Verbindung der ersten Umlenkfolie 4a mit sich selbst erzielt.

Figur 5 zeigt, dass zwischen jeweils zwei benachbarten Folien 3a, 3b, 4a, 4b, d. h. zwischen jeweils einer Membranfolie 3a, 3b und jeweils einer Umlenkfolie 4a, 4b bzw. zwischen Abschnitten dieser benachbarten Folien 3a, 3b, 4a, 4b jeweils ein als Strömungsgitter ausgebildeter Abstandshalter 9 angeordnet ist, der die beiden Folien 3a, 3b, 4a, 4b bzw. deren Abschnitte voneinander trennt bzw. beabstandet und somit zwischen den Folien 3a, 3b, 4a, 4b bzw. deren Abschnitte einen Strömungskanal 8a, 8b bildet und/oder bereitstellt.

Beispiel: gewickelte Vanadium- Redoxflowbatterie

Redoxreaktionen:

Anolyt: $\qquad$ $V^{2+} \rightleftharpoons V^{3+} + e^-$, **$E^0$ = - 0,255 V**

Katholyt: $\qquad$ $VO_2^+ + 2H^+ + e^- \rightleftharpoons VO^{2+} + H_2O$, **$E^0$ = + 1,000 V**

In der Praxis erhält man eine maximale Spannung von ca. 1,51 V im geladenen Zustand und von 1,2 V im entladenen Zustand bei einer Vanadiumkonzentration von ca. 1,5 - 2 mol/l in den Elektrolyten. Zusätzlich sind ca. 2-3 mol Schwefelsäure und < 0,1 mol/l Phosphorsäure in der Ausgangslösung enthalten.

Um eine 1 kW Redoxflowbatterie bei 6 V Spannung zu erhalten, werden fünf Redoxflowbatteriemodule mit 200 W Leistung und 1,2 V Spannung in Reihe geschaltet.

Es ergibt sich ein Stromfluss von 170 A in jedem gewickelten Redoxflowbatteriemodul. Hierfür müssen 6,4 mol/h Vanadium reagieren. Bei einer nutzbaren Konzentrationsdifferenz zwischen beladenem und entladenem Zustand von 1,3 mol/l beträgt der Volumenstrom 5 l/h für jeden Elektrolyt. Dieser wird in jedem Wickel mit Durchflussbegrenzern für beide Elektrolyte gewährleistet.

Für die Bestimmung der Materialien und Geometrien der Folien und des Wickels wird zudem ein max. Spannungsabfall von 0,03 V an den elektrisch leitenden Umlenkfolien mit Spannprofilen und über die Membranfolie angenommen.

In einer gewickelten Zelle werden beide Oberflächen der Umlenkfolien als Elektroden eingesetzt. Somit ergibt sich ein Stromfluss von 85 A durch die Membranfolie mit einer Fläche L x b und einer Dicke s sowie ein mittlerer Stromfluss von ebenfalls 85 A durch die Umlenkfolie mit der Weglänge L vom äußeren Wickelende bis zur Spannvorrichtung und der Querschnittsfläche b x s bis zur Spannvorrichtung. Der resultierende zulässige Widerstand ist dann jeweils:

$$R = U/I = 0,03V/85A = 3,5 \cdot 10^{-4} \; \Omega$$

Als Membranfolie soll eine fumasep FAP450 der Fumatech BWT GmbH eingesetzt werden. Der spezifische Widerstand der Folie wird mit 0,6 $\Omega cm^2$ angegeben. Dann ergibt sich eine minimale Querschnittsfläche von

$$A_q = 0,6 \; \Omega cm^2 / 3,5 \cdot 10^{-4} \; \Omega = 1700 \; cm^2$$

$$\text{Gewählte Geometrie} \quad b \times L = 2000 \; cm^2$$

Wegen der hohen elektrischen Leitfähigkeit von Kupfer (ca. 50 $\cdot 10^4 \; \Omega^{-1} cm^{-1}$) wird eine Kupferfolie mit s = 0,02 cm Dicke als Umlenkfolie eingesetzt.

$$\text{Man erhält } L/b = R \cdot s \cdot 50 \cdot 10^4 \; \Omega^{-1} cm^{-1} \; \rightarrow \; = 3,5$$

Somit ergeben sich für die Batterie eine Folienbreite von 25 cm und eine Folienlänge von 85 cm. Um das Wickeln zu erleichtern, können auch jeweils zwei Kupferfolien mit 0,1 mm Dicke gemeinsam als eine Umlenkfolie gewickelt werden. Die Folien werden am Folienanfang auf Kupferrohre mit 1 mm Wandstärke als Spannprofile gelötet. Alle Oberflächen in Kontakt mit dem Elektrolyten müssen dann zum Korrosionsschutz noch leitfähig und elastisch beschichtet werden, wobei beim Wickeln die Beschichtung erhalten bleibt. Die Stromdichte auf der Umlenkfolienoberfläche beträgt 42,5 mA/cm$^2$. Bei diesen relativ geringen Stromdichten kann auf eine aufwändige Strukturierung der Oberfläche bei der Beschichtung verzichtet werden.

Als Abstandshalter werden kommerzielle kohlenstoffhaltige Vliese von SGL Carbon oder Freudenberg eingesetzt, diese reduzieren die ohmschen Verluste in den Umlenkfolien nochmals. Zu- und Ablaufrohre sind Gitterrohre aus Polypropylen oder Polyethylen, Spannrohre für die Membranfolie und Zentralkörper sind jeweils Edelstahlrohre mit einem PP Schrumpfschlauch für den Korrosionsschutz.

Der Verguss der Stirnseiten nach dem Wickeln erfolgt mit einem chemisch resistenten Epoxid- oder Vinylesterharz.

Vor dem Verguss werden die Spannrohre der elektrisch leitenden Umlenkfolien auf einer Stirnseite mit bündig eingepassten Kupferrohren verlängert. Diese ragen beim Verguss der einen Stirnseite aus der Vergussform.

Nach dem Verguss der anderen Stirnseite werden in dem Bereich der Zulaufrohre 7a und der Ablaufrohre 7b Bohrungen eingebracht. Die Bohrungen ermöglichen ein Ein- und Ausströmen in die bzw. aus den Zulauf- bzw. Ablaufrohren 7a, 7b.

Für das gewickelte Membranmodul einer 1 kW Redoxflowbatterie mit 6 V Spannung werden somit als Hauptkomponenten benötigt:

> 2 m$^2$ Membranfolie fumasep FAP450
> 2 m$^2$ Cu-Folie 0,2 mm
> 4 m$^2$ kohlenstoffhaltiger Vliesstoff
> 2,5 m Cu-Rohre 10 - 25 mm Durchmesser
> 2,5 m Edelstahlrohr 10 - 25 mm Durchmesser
> 2,5 m Gitterrohre 10 - 25 mm Durchmesser
> ca. 1 - 2 kg Vergussharz
> 1,25 m Edelstahlrohr 25 - 50 mm Durchmesser

Eine jeweilige Redoxflowbatterie weist mindestens ein gewickeltes Redoxflowbatteriemodul 10a, 10b auf, das mindestens zwei durch mindestens eine Membranfolie getrennte Halbzellen aufweist, die jeweils von flüssigen Elekrolyten 106, 107 mit je einer von zwei in einem Lösungsmittel gelösten redoxaktiven Substanzen 101, 103, die über eine Redoxreaktion miteinander wechselwirken, durchströmt werden, wobei die mindestens zwei getrennten Halbzellen durch Aufwickeln von mindestens einem ersten Abschnitt 3a mindestens einer Membranfolie, einem Abschnitt mindestens einer ersten elektrisch leitenden Umlenkfolie 4a, mindestens einem zweiten Abschnitt 3b der mindestens einen Membranfolie, und einem Abschnitt mindestens einer zweiten elektrisch leitenden Umlenkfolie 4b auf einen Zentralkörper 1 gebildet sind, wobei durch jeweils mindestens einen Abstandshalter 9 jeweils Strömungskanäle 8a, 8b, 8c, 8d zwischen den Membranfolienabschnitten und Umlenkfolienabschnitten nach dem Aufwickeln gebildet sind.

Das Redoxflowbatteriemodul weist in Ausgestaltung mindestens eine erste Membranfolie und mindestens eine zweite Membranfolie auf, wobei der mindestens eine erste Abschnitt 3a der ersten Membranfolie zugehörig ist und der mindestens eine zweite Abschnitt 3b der zweiten Membranfolie zugehörig ist.

Der Zentralkörper 1 weist in Ausgestaltung eine erste Hälfte und eine zweite Hälfte auf, die miteinander verbunden sind und zwischen die die mindestens eine den ersten Abschnitt 3a und den zweiten Abschnitt 3b aufweisende durchgehende Membranfolie gelegt ist.

Alternativ hierzu ist der Zentralkörper 1 einteilig ausgebildet.

Die Membranfolienabschnitte sind in Ausgestaltung in Abhängigkeit von der Redoxreaktion und dem gewählten Lösungsmittel gewählt, wobei die Membran der Membranfolienabschnitte insbesondere ausgewählt ist aus der Gruppe bestehend aus dichten Anionentauschermembranen, Kationentauschermembranen, Porenmembranen, beliebige Kombinationen dieser Membrantypen.

Die elektrisch leitenden Flachfolien sind in Ausgestaltung als jeweilige elektrisch leitende Umlenkfolienabschnitte eingesetzt, die als Elektroden fungieren, wobei die Elektroden in den Halbzellen jeweils von einem Elektrolyt mit einer der beiden redoxaktiven Substanzen umströmt werden.

Die Umlenkfolien sind in Ausgestaltung aus einer Verbindung aus Kohlenstoff und mindestens einem der Werkstoffe Polypropylen PP, Polyethylen PE, Polyvinylchlorid PVC, Polyphenylenether PPE, Polyphenylenoxid PPO, Polyphenylensulfid PPS, Polytetrafluorethylen PTFE oder Polyetheretherketon PEEK gebildet. Dabei kann der Kohlenstoff in den Umlenkfolien zumindest teilweise aus Graphit, und/oder Kohlenstoffnanoröhrchen und/oder Graphen bestehen.

Als jeweilige Umlenkfolien für die Redoxreaktion sind in Ausgestaltung geeignete korrosionsresistente Elektroden durch Beschichtung von Metall- oder Polymerfolien hergestellt, wobei die Beschichtung elektrisch leitfähig ist, wobei die elektrisch leitfähige Beschichtung Graphit, und/oder Graphen und/oder Kohlenstoffnanoröhrchen enthält.

Die zu beschichtenden Folien sind in Ausgestaltung Polymerfolien aus mindestens einem der Werkstoffe Polypropylen PP, Polyethylen PE, Polyvinylchlorid PVC, Polyphenylenether PPE, Polyphenylenoxid PPO, Polyphenylensulfid PPS, Polytetrafluorethylen PTFE oder Polyetheretherketon PEEK. Alternativ sind die zu beschichtenden Folien Metallfolien aus mindestens einem der elektrisch leitenden Werkstoffe Silber, Kupfer oder Aluminium.

Die Folienbeschichtung ist in Ausgestaltung durch Lackierung und/oder durch Bedrucken mit einer Tinte, die Graphit und/oder Kohlenstoffnanoröhrchen und/oder Graphen enthält, gebildet.

Außerdem ist es möglich, dass die Umlenkfolien zusätzlich mit elektrisch leitenden und katalytisch aktiven Substanzen beschichtet sind, wobei mindestens eine Oberfläche der jeweiligen Umlenkfolien zur Oberflächenvergrößerung strukturiert ist, und wobei eine Strukturierung der Oberfläche der jeweiligen Umlenkfolien den jeweiligen mindestens einen Abstandshalter bildet, welcher mindestens einen Strömungskanal für die Elektrolyten in den Halbzellen definiert.

Der jeweilige mindestens eine Abstandshalter ist in Ausgestaltung aus Filzen, Vliesen und/oder Papieren gebildet. Weiterhin umfasst der jeweilige mindestens eine Abstandshalter biplanare Gitter und/oder Gewebe.

Das mindestens eine Zulaufrohr 7a und das mindestens eine Ablaufrohr 7b sind in Ausgestaltung als Gitterrohre ausgebildet.

Außerdem ist der jeweilige mindestens eine Abstandshalter in Ausgestaltung elektrisch leitfähig und/oder katalytisch beschichtet.

Weiterhin kann der jeweilige mindestens eine Abstandshalter zumindest teilweise mit Graphit, und/oder Kohlenstoffnanoröhrchen und/oder Graphen beschichtet sein.

Es ist möglich, dass vor Einsatz des jeweiligen mindestens einen Abstandshalters in die Redoxflowbatterie eine Vorbehandlung des mindestens einen einzusetzenden Abstandshalters durchgeführt wurde, wobei mit einer Pyrolyse freier und reaktiver Kohlenstoff in dem mindestens einen Abstandshalter erzeugt wurde.

Die Abstandshalter sind in möglicher Ausgestaltung aus mindestens einem der Werkstoffe Polypropylen PP, Polyethylen PE, Polyvinylchlorid PVC, Polyphenylenether PPE, Polyphenylenoxid PPO, Polyphenylensulfid PPS, Polytetrafluorethylen PTFE oder Polyetheretherketon PEEK.

In Ausgestaltung sind die Abschnitte der Folien jeweils an mindestens einem Abdichtelement befestigt, das an dem Zentralkörper angebracht ist und die Abschnitte der jeweiligen Folien zum Abdichten zwischen dem jeweiligen mindestens einen Abdichtelement und dem Zentralkörper einspannt.

Die Redoxflowbatterie kann elektrisch leitende Abdichtelemente für die Abschnitte der jeweiligen elektrisch leitenden Umlenkfolien aufweisen, die mit den Abschnitten der jeweiligen elektrisch leitenden Umlenkfolien elektrisch leitend verbunden sind, wobei die elektrisch leitenden Abdichtelemente mindestens einen der Werkstoffe Kupfer, Aluminium, Kohlenstoff in der Form von Graphit, und/oder Graphen und/oder Kohlenstoffnanoröhrchen umfassen können. Außerdem können die elektrisch leitenden Abdichtelemente aus einer Verbindung von Kohlenstoff und mindestens einem der Werkstoffe Polypropylen PP, Polyethylen PE, Polyvinylchlorid PVC, Polyphenylenether PPE, Polyphenylenoxid PPO, Polyphenylensulfid PPS, Polytetrafluorethylen PTFE oder Polyetheretherketon PEEK bestehen oder eine Beschichtung dieser Art umfassen.

Das Redoxflowbatteriemodul weist in Ausgestaltung elektrisch isolierende Abdichtelemente für die Abschnitte der Membranfolie auf, wobei die elektrisch isolierenden Abdichtelemente Profile aus mindestens einem der Werkstoffe glasfaserverstärkter Kunststoff GFK, Polypropylen PP, Polyethylen PE, Polyvinylchlorid PVC, Polyphenylenether PPE, Polyphenylenoxid PPO, Polyphenylensulfid PPS, Polytetrafluorethylen PTFE oder Polyetheretherketon PEEK oder Profile, die einen elektrisch isolierenden Überzug oder eine Beschichtung aus diesen Materialien aufweisen, sein können.

Ferner ist es möglich, dass die Abdichtelemente der Membranfolienabschnitte und der elektrisch leitenden Umlenkfolienabschnitte abwechselnd an dem Zentralkörper befestigt sind oder abwechselnd den Zentralkörper bilden, und zwischen den Folien jeweils mindestens ein Abstandshalter angebracht ist, wodurch nach dem Aufwickeln die dann ausgebildeten Strömungskanäle im Wickel jeweils von einer Membranfolie und einer Umlenkfolie begrenzt sind.

Das mindestens eine Redoxflowbatteriemodul kann mindestens zwei Zulaufprofile und mindestens zwei Ablaufprofile aufweisen, wobei die Zulauf- und Ablaufprofile alternierend mit den Abdichtelementen der Membran- und Umlenkfolienabschnitte am Zentralkörper angeordnet sind und/oder zumindest teilweise integraler Bestandteil der Abdichtelemente sind.

In Ausgestaltung der Redoxflowbatterie sind die mindestens zwei Abschnitte der Membranfolie am Wickelende dicht miteinander verbunden, wobei entweder der zwischen diesen Membranfolienabschnitten befindliche Umlenkfolienabschnitt davor so gekürzt wird, dass die Abstandshalter den zwischen den beiden verbundenen Membranfolienabschnitten strömenden Elektrolyt am Wickelende um die Umlenkfolie umlenken oder im Falle von Oberflächenstrukturierungen der Umlenkfolie als Abstandshalter die Umlenkfolie am Wickelende ausreichend für eine Strömungsumlenkung des Elektrolyten perforiert wird und wobei nach dem Verbinden der Membranfolienabschnitte der verbleibende nun am Wickelende außenliegende Umlenkfolienabschnitt auf der noch frei zugänglichen Oberfläche dieses Umlenkfolienabschnitts am Wickelende ebenfalls dicht angebracht wird, wobei die Abstandshalter über die am Wickelende verbundenen Membranfolienabschnitte hinausragen und somit den zwischen den beiden nun verbundenen Umlenkfolienabschnitten strömenden Elektrolyt am Wickelende um die verbundenen Membranfolienabschnitte umlenken, wobei die Enden der Membranfolienabschnitte am äußeren Wickelende durch eine gemeinsame Einwicklung und ein Klemmprofil aus Polypropylen PP, Polyethylen PE, Polyvinylchlorid PVC, Polyphenylenether PPE, Polyphenylenoxid PPO, Polyphenylensulfid PPS, Polytetrafluorethylen PTFE oder Polyetheretherketon PEEK mechanisch abgedichtet sind.

Zu- und Ablaufprofile für die Elektrolyte können derart definiert sein, dass ein reiner Gegenstrombetrieb ermöglicht wird, wobei einer der beiden Elektrolyten den am Wickelende von den Membranfolienabschnitten eingeschlossen Umlenkfolienabschnitt in beliebiger Richtung umströmt. Weiterhin können die Zu- und Ablaufprofile für die Elektrolyte derart definiert sein, dass ein reiner Gleichstrombetrieb ermöglicht wird, wobei einer der beiden Elektrolyten den am Wickelende von den Membranfolienabschnitten eingeschlossen Umlenkfolienabschnitt in beliebiger Richtung umströmt.

Bei dem Verfahren zur Stromerzeugung mit in Fluiden gelösten redoxaktiven Substanzen wird ein erstes Fluid in einen ersten Strömungskanal eines gewickelten Redoxflowbatteriemoduls und ein zweites Fluid in einen zweiten Strömungskanal des gewickelten Redoxflowbatteriemoduls einer Ausführungsform der vorgestellten Redoxflowbatterie geleitet, wobei das erste Fluid und das zweite Fluid nach einem Gleichstrom- oder Gegenstromprinzip durch das Redoxflowbatteriemodul geleitet werden.

Dabei wird der erste Strömungskanal des Redoxflowbatteriemoduls zumindest bereichsweise, d. h. lediglich innerhalb eines ausgewählten Bereichs, auf einer ersten Seite von einer Ionenaustauschermembranfolie und auf einer zweiten Seite von einer ersten elektrisch leitenden Umlenkfolie begrenzt. Der zweite Strömungskanal wird zumindest bereichsweise auf einer ersten Seite von einer zweiten elektrisch leitenden Umlenkfolie und auf einer zweiten Seite von der Ionenaustauschermembranfolie begrenzt, wobei in dem ersten Strömungskanal und/oder in dem zweiten Strömungskanal ein Abstandshalter angeordnet wird.

In Ausgestaltung werden das erste Fluid und das zweite Fluid an einem Ende des ersten Strömungskanals bzw. des zweiten Strömungskanals umgelenkt, wodurch abhängig von den Konzentrationen der redoxaktiven Substanzen eine Elektronenübertragung zwischen dem ersten Strömungskanal und dem zweiten Strömungskanal über die elektrisch leitenden Umlenkfolien und eine Ionenübertragung durch die Membranfolie erfolgt.

Zur Spannungserhöhung der Redoxflowbatterie auf eine gewünschte Betriebsspannung können mehrere Redoxflowbatteriemodule elektrisch in Reihe geschaltet werden, wobei bei einer Reihenschaltung mehrerer Redoxflowbatteriemodule die Durchflüsse der Elektrolyte durch die einzelnen Redoxflowbatteriemodule mit Durchflussbegrenzern auf gleiche Volumenströme geregelt werden, wobei mehrere Gruppen von in Reihe zueinander geschalteten Redoxflowbatteriemodulen parallel zueinander geschaltet werden.

## Patentansprüche

1.  Redoxflowbatterie mit mindestens einem gewickelten Redoxflowbatteriemodul (10a, 10b), das mindestens zwei durch mindestens eine Membranfolie getrennte Halbzellen aufweist, die jeweils von flüssigen Elektrolyten (106, 107) mit je einer von zwei in einem Lösungsmittel gelösten redoxaktiven Substanzen (101, 103), die über eine Redoxreaktion miteinander wechselwirken, durchströmt werden, wobei die mindestens zwei getrennten Halbzellen durch Aufwickeln von mindestens einem ersten Abschnitt (3a) mindestens einer Membranfolie, einem Abschnitt mindestens einer ersten elektrisch leitenden Umlenkfolie (4a), mindestens einem zweiten Abschnitt (3b) der mindestens einen Membranfolie, und einem Abschnitt mindestens einer zweiten elektrisch leitenden Umlenkfolie (4b) auf einen Zentralkörper (1) gebildet sind, wobei durch jeweils mindestens einen Abstandshalter (9) jeweils Strömungskanäle (8a, 8b, 8c, 8d) zwischen den Membranfolienabschnitten und Umlenkfolienabschnitten nach dem Aufwickeln gebildet sind.

2.  Redoxflowbatterie nach Anspruch 1, wobei das Redoxflowbatteriemodul mindestens eine erste Membranfolie und mindestens eine zweite Membranfolie aufweist, wobei der mindestens eine erste Abschnitt (3a) der ersten Membranfolie zugehörig ist und der mindestens eine zweite Abschnitt (3b) der zweiten Membranfolie zugehörig ist.

3.  Redoxflowbatterie nach Anspruch 1, bei der der Zentralkörper (1) eine erste Hälfte und eine zweite Hälfte aufweist, die miteinander verbunden sind und zwischen die die mindestens eine den ersten Abschnitt (3a) und den zweiten Abschnitt (3b) aufweisende durchgehende Membranfolie gelegt ist.

4.  Redoxflowbatterie nach einem der voranstehenden Ansprüche, bei der als jeweilige Umlenkfolien für die Redoxreaktion geeignete korrosionsresistente Elektroden durch Beschichtung von Metall- oder Polymerfolien hergestellt sind, wobei die Beschichtung elektrisch leitfähig ist.

**5.** Redoxflowbatterie nach Anspruch 4, bei der die Umlenkfolien zusätzlich mit elektrisch leitenden und katalytisch aktiven Substanzen beschichtet sind, wobei mindestens eine Oberfläche der jeweiligen Umlenkfolien zur Oberflächenvergrößerung strukturiert ist, wobei eine Strukturierung der Oberfläche der jeweiligen Umlenkfolien den jeweiligen mindestens einen Abstandshalter bildet, welcher mindestens einen Strömungskanal für die Elektrolyten in den Halbzellen definiert.

**6.** Redoxflowbatterie nach einem der voranstehenden Ansprüche, bei der der jeweilige mindestens eine Abstandshalter aus Filzen, Vliesen und/oder Papieren gebildet ist, und/oder bei der der jeweilige mindestens eine Abstandshalter biplanare Gitter und/oder Gewebe umfasst, und/oder bei der der jeweilige mindestens eine Abstandshalter elektrisch leitfähig und/oder katalytisch beschichtet ist, und/oder bei der der jeweilige mindestens eine Abstandshalter zumindest teilweise mit Graphit, und/oder Kohlenstoffnanoröhrchen und/oder Graphen beschichtet ist.

**7.** Redoxflowbatterie nach einem der voranstehenden Ansprüche, bei der vor Einsatz des jeweiligen mindestens einen Abstandshalters in die Redoxflowbatterie eine Vorbehandlung des mindestens einen einzusetzenden Abstandshalters durchgeführt wurde, wobei mit einer Pyrolyse freier und reaktiver Kohlenstoff in dem mindestens einen Abstandshalter erzeugt wurde.

**8.** Redoxflowbatterie nach einem der voranstehenden Ansprüche, bei der die Abschnitte der Folien jeweils an mindestens einem Abdichtelement befestigt sind, das an dem Zentralkörper angebracht ist und die Abschnitte der jeweiligen Folien zum Abdichten zwischen dem jeweiligen mindestens einen Abdichtelement und dem Zentralkörper einspannt.

**9.** Redoxflowbatterie nach einem der voranstehenden Ansprüche, die elektrisch leitende Abdichtelemente für die Abschnitte der jeweiligen elektrisch leitenden Umlenkfolien aufweist, die mit den Abschnitten der jeweiligen elektrisch leitenden Umlenkfolien elektrisch leitend verbunden sind.

**10.** Redoxflowbatterie nach einem der voranstehenden Ansprüche, bei der die Abdichtelemente der Membranfolienabschnitte und der elektrisch leitenden Umlenkfolienabschnitte abwechselnd an dem Zentralkörper befestigt sind oder abwechselnd den Zentralkörper bilden, und zwischen den Folien jeweils mindestens ein Abstandshalter angebracht ist, wodurch nach dem Aufwickeln die dann ausgebildeten Strömungskanäle im Wickel jeweils von einer Membranfolie und einer Umlenkfolie begrenzt sind.

**11.** Redoxflowbatterie nach einem der voranstehenden Ansprüche, bei der die mindestens zwei Abschnitte der Membranfolie am Wickelende dicht miteinander verbunden sind, wobei entweder der zwischen diesen Membranfolienabschnitten befindliche Umlenkfolienabschnitt davor so gekürzt wird, dass die Abstandshalter den zwischen den beiden verbundenen Membranfolienabschnitten strömenden Elektrolyt am Wickelende um die Umlenkfolie umlenken oder im Falle von Oberflächenstrukturierungen der Umlenkfolie als Abstandshalter die Umlenkfolie am Wickelende ausreichend für eine Strömungsumlenkung des Elektrolyten perforiert wird und wobei nach dem Verbinden der Membranfolienabschnitte der verbleibende nun am Wickelende außenliegende Umlenkfolienabschnitt auf der noch frei zugänglichen Oberfläche dieses Umlenkfolienabschnitts am Wickelende ebenfalls dicht angebracht wird, wobei die Abstandshalter über die am Wickelende verbundenen Membranfolienabschnitte hinausragen und somit den zwischen den beiden nun verbundenen Umlenkfolienabschnitten strömenden Elektrolyt am Wickelende um die verbundenen Membranfolienabschnitte umlenken.

**12.** Redoxflowbatterie nach einem der voranstehenden Ansprüche, bei der Zu- und Ablaufprofile für die Elektrolyte derart definiert sind, dass ein reiner Gegenstrombetrieb ermöglicht wird, wobei einer der beiden Elektrolyten den am Wickelende von den Membranfolienabschnitten eingeschlossen Umlenkfolienabschnitt in beliebiger Richtung umströmt.

**13.** Redoxflowbatterie nach einem der voranstehenden Ansprüche, bei der Zu- und Ablaufprofile für die Elektrolyte derart definiert sind, dass ein reiner Gleichstrombetrieb ermöglicht wird, wobei einer der beiden Elektrolyten den am Wickelende von den Membranfolienabschnitten eingeschlossen Umlenkfolienabschnitt in beliebiger Richtung umströmt.

**14.** Verfahren zur Stromerzeugung mit in Fluiden gelösten redoxaktiven Substanzen, bei dem ein erstes Fluid in einen ersten Strömungskanal eines gewickelten Redoxflowbatteriemoduls und ein zweites Fluid in einen zweiten Strömungskanal des gewickelten Redoxflowbatteriemoduls einer Redoxflowbatterie nach einem der voranstehenden Ansprüche geleitet wird, wobei das erste Fluid und das zweite Fluid nach einem Gleichstrom- oder Gegenstromprinzip durch das Redoxflowbatteriemodul geleitet werden.

15. Verfahren nach Anspruch 14, bei dem der erste Strömungskanal des Redoxflowbatteriemoduls zumindest bereichsweise, d. h. lediglich innerhalb eines ausgewählten Bereichs, auf einer ersten Seite von einer lonenaustauschermembranfolie und auf einer zweiten Seite von einer ersten elektrisch leitenden Umlenkfolie begrenzt wird, und bei dem der zweite Strömungskanal zumindest bereichsweise auf einer ersten Seite von einer zweiten elektrisch leitenden Umlenkfolie und auf einer zweiten Seite von der lonenaustauschermembranfolie begrenzt wird, wobei in dem ersten Strömungskanal und/oder in dem zweiten Strömungskanal ein Abstandshalter angeordnet wird.

**Claims**

1. A redox flow battery with at least one wound redox flow battery module (10a, 10b) that has at least two half-cells separated by at least one membrane film, wherein fluid electrolytes (106, 107) respectively with one of two redox-active substances dissolved in a solution, which substances (101, 103) interact with one another via a redox reaction, flow through each half-cell, wherein the at least two separated half-cells are formed by winding at least a first section (3a) of at least one membrane film, a section of at least one first electrically conducting deflecting film (4a), at least one second section (3b) of the at least one membrane film, and a section of at least one second electrically conducting deflecting film (4b) onto a central body (1), wherein after the winding, respective flow channels (8a, 8b, 8c, 8d) are formed between the membrane film sections and deflecting film sections by at least one spacer (9), respectively.

2. The redox flow battery according to claim 1, wherein the redox flow battery module has at least one first membrane film and at least one second membrane film, wherein the at least one first section (3a) is part of the first membrane film and the at least one second section (3b) is part of the second membrane film.

3. The redox flow battery according to claim 1, wherein the central body (1) has a first half and a second half which are connected to one another and between which is laid the at least one continuous membrane film that has the first section (3a) and the second section (3b).

4. The redox flow battery according to any one of the preceding claims, wherein corrosion-resistant electrodes suitable for the redox reaction are produced as respective deflecting films by coating metal or polymer films, wherein the coating is electrically conductive.

5. The redox flow battery according to claim 4, wherein the deflecting films are additionally coated with electrically conducting and catalytically active substances, wherein at least one surface of the respective deflecting films is structured so as to enlarge its surface, wherein a structuring of the surface of the respective deflecting films forms the respective at least one spacer, which defines at least one flow channel for the electrolytes in the half-cells.

6. The redox flow battery according to any one of the preceding claims, wherein the respective at least one spacer is formed from felts, non-wovens and/or papers, and/or wherein the respective at least one spacer comprises biplanar meshes and/or wovens, and/or wherein the respective at least one spacer is electrically conductive and/or catalytically coated, and/or wherein the respective at least one spacer is coated at least partially with graphite, and/or carbon nano tubes and/or graphene.

7. The redox flow battery according to any one of the preceding claims, wherein a pretreatment of the at least one spacer to be inserted has been carried out before the respective at least one spacer is inserted into the redox flow battery, wherein free and reactive carbon has been created in the at least one spacer by pyrolysis.

8. The redox flow battery according to any one of the preceding claims, wherein the sections of the films are respectively fastened to at least one sealing element attached to the central body and the sections of the respective films are tensioned, for sealing purposes, between the respective at least one sealing element and the central body.

9. The redox flow battery according to any one of the preceding claims, which has electrically conducting sealing elements for the sections of the respective electrically conducting deflecting films, which are connected in an electrically conducting manner to the sections of the respective electrically conducting deflecting films.

10. The redox flow battery according to any one of the preceding claims, wherein the sealing elements of the membrane film sections and the electrically conducting deflecting film sections are alternatingly fixed to the central body or alternatingly form the central body, and respectively at least one spacer is disposed between the films, whereby after the winding, the flow channels so formed in the winding are respectively bordered by a membrane film and a deflecting film.

11. The redox flow battery according to any of the preceding claims, wherein the at least two sections of the membrane film are tightly connected to one another at the end of the winding, wherein either the deflecting film section located between these membrane film sections is shortened prior, such that the spacers deflect the electrolyte flowing between the two connected membrane film sections around the deflecting film at the winding end, or in the case of surface structuring of the deflecting film serving as a spacer, the deflecting film is perforated at the winding end sufficiently for deflecting a flow of the electrolytes, and wherein after the membrane film sections are connected, the remaining deflecting film section that then is located on the outside at the winding end is also tightly attached on the still freely accessible surface of this deflecting film section, wherein the spacers project beyond the membrane film sections connected at the winding end and therefore deflect the electrolyte flowing between the now connected deflecting film sections around the connected membrane film sections at the winding end.

12. The redox flow battery according to any one of the preceding claims, wherein the inflow and outflow profiles for the electrolyte are defined such that
purely counterflow operation is enabled, wherein one of the two electrolytes flows in an arbitrary direction around the deflecting film section enclosed by the membrane film sections at the winding end.

13. The redox flow battery according to any one of the preceding claims, wherein the inflow and outflow profiles for the electrolyte are defined such that purely parallel flow operation is enabled, wherein one of the two electrolytes flows in an arbitrary direction around the deflecting film section enclosed by the membrane film sections at the winding end.

14. A method for generating power with redox-active substances dissolved in fluids, wherein a first fluid is guided into a first flow channel of a wound redox flow battery module and a second fluid is guided into a second flow channel of the wound redox flow battery module of a redox flow battery according to any one of the preceding claims, wherein the first fluid and the second fluid are guided through the redox flow battery module according to a parallel flow or counterflow principle.

15. The method according to claim 14, wherein the first flow channel of the redox flow battery module is bordered at least in regions, i.e. merely within a selected region, on a first side by an ion exchange membrane film and on a second side by a first electrically conducting deflecting film, and wherein the second flow channel is bordered at least in regions on a first side by a second electrically conducting deflecting film and on a second side by the ion exchange membrane film, wherein a spacer is arranged in the first flow channel and/or in the second flow channel.

## Revendications

1. Batterie à flux d'oxydoréduction ayant au moins un module enroulé de batterie à flux d'oxydoréduction (10a, 10b), présentant au moins deux demi-cellules séparées par au moins un film membranaire et respectivement traversées par des électrolytes liquides (106, 107) contenant chacun l'une de deux substances (101, 103) à oxydoréduction active dissoutes dans un solvant, qui interagissent par une action d'oxydoréduction, les au moins deux demi-cellules séparées étant formées par enroulement sur un corps central (1) d'au moins une première section (3a) d'au moins un film membranaire, d'une section d'au moins un premier film déviateur électroconducteur (4a), d'au moins une deuxième section (3b) de l'au moins un film membranaire et d'une section d'au moins un deuxième film déviateur électroconducteur (4b), des canaux d'écoulement (8a, 8b, 8c, 8d) étant respectivement formés par au moins un écarteur (9) entre les sections du film membranaire et les sections du film déviateur après l'enroulement.

2. Batterie à flux d'oxydoréduction selon la revendication 1, dans laquelle le module de batterie à flux d'oxydoréduction présente au moins un premier film et au moins un deuxième film membranaire, l'au moins une première section (3a) étant inhérente au premier film membranaire et l'au moins une deuxième section (3b) étant inhérente au deuxième film membranaire.

3. Batterie à flux d'oxydoréduction selon la revendication 1, dans laquelle le corps central (1) présente une première moitié et une seconde moitié, qui sont reliées l'une à l'autre et entre lesquelles est placé l'au moins un film membranaire continu présentant la première section (3a) et la deuxième section (3b).

4. Batterie à flux d'oxydoréduction selon l'une des revendications précédentes, dans laquelle des électrodes résistantes à la corrosion, qui servent de films déviateurs pour la réaction d'oxydoréduction, sont formées par revêtement de films de métal ou de polymère, le revêtement étant électroconducteur.

5. Batterie à flux d'oxydoréduction selon la revendication 4, dans laquelle les films déviateurs sont également revêtus de substances électroconductrices à activité catalytique, au moins une surface des films déviateurs respectifs étant structurée pour agrandir la surface, une structuration de la surface des films déviateurs respectifs formant l'au moins un écarteur respectif qui définit au moins un canal d'écoulement pour les électrolytes dans les demi-cellules.

6. Batterie à flux d'oxydoréduction selon l'une des revendications précédentes, dans laquelle l'au moins un écarteur respectif est réalisé en feutre, en non-tissé et/ou en papier, et/ou l'au moins un écarteur respectif comprend de la maille et/ou du tissu bi-plan, et/ou l'au moins un écarteur respectif est électroconducteur et/ou revêtu d'un matériau catalytique, et/ou l'au moins un écarteur respectif est revêtu au moins partiellement de graphite et/ou de nanotubes de carbone et/ou de graphène.

7. Batterie à flux d'oxydoréduction selon l'une des revendications précédentes, dans laquelle l'au moins un écarteur devant être mis en place a été prétraité avant son utilisation dans la batterie à flux d'oxydoréduction, du carbone libre et réactif ayant été généré dans l'au moins un écarteur par une pyrolyse.

8. Batterie à flux d'oxydoréduction selon l'une des revendications précédentes, dans laquelle les sections des films sont fixées respectivement à au moins un élément d'étanchéité qui est apposé sur le corps central et qui serre les sections des films respectifs à des fins d'étanchéification entre l'au moins un élément d'étanchéité respectif et le corps central.

9. Batterie à flux d'oxydoréduction selon l'une des revendications précédentes, présentant des éléments d'étanchéité électroconducteurs pour les sections des films déviateurs électroconducteurs, qui sont en contact électroconducteur avec les sections des films déviateurs électroconducteurs respectifs.

10. Batterie à flux d'oxydoréduction selon l'une des revendications précédentes, dans laquelle les éléments d'étanchéité des sections des films membranaires et des sections des films déviateurs électroconducteurs sont fixés au corps central en alternance ou forment le corps central en alternance, et au moins un écarteur est placé entre les films de telle sorte qu'après l'enroulement les canaux d'écoulement alors formés dans la bobine sont délimités chacun par un film membranaire et un film déviateur.

11. Batterie à flux d'oxydoréduction selon l'une des revendications précédentes, dans laquelle les au moins deux sections du film membranaire sont reliées de manière étanche l'une à l'autre à l'extrémité de la bobine, sachant que soit la section du film déviateur se trouvant entre ces sections du film membranaire est raccourcie au préalable de telle sorte que les écarteurs font dévier l'électrolyte s'écoulant entre les deux sections du film membranaire reliées autour du film déviateur à l'extrémité de la bobine, soit, en cas de structurations de surface du film déviateur faisant office d'écarteurs, le film déviateur est suffisamment perforé à l'extrémité de la bobine pour faire dévier l'écoulement de l'électrolyte et, après la liaison des sections du film membranaire, la section restante du film déviateur située à l'extérieur de l'extrémité de la bobine est également appliquée de manière étanche sur la surface encore librement accessible de cette section du film déviateur à l'extrémité de la bobine, les écarteurs faisant saillie au-delà des sections du film membranaire, reliées à l'extrémité de la bobine, et faisant ainsi dévier l'électrolyte s'écoulant entre les deux sections du film déviateur, désormais reliées à l'extrémité de la bobine, et ce, tout autour des sections reliées du film membranaire.

12. Batterie à flux d'oxydoréduction selon l'une des revendications précédentes, dans laquelle des profils d'entrée et de sortie pour les électrolytes sont définis de manière à permettre un fonctionnement exclusivement à contre-courant, l'un des deux électrolytes circulant dans n'importe quelle direction autour de la section du film déviateur, renfermée à l'extrémité de la bobine par les sections du film membranaire.

13. Batterie à flux d'oxydoréduction selon l'une des revendications précédentes, dans laquelle des profils d'entrée et de sortie pour les électrolytes sont définis de manière à permettre un fonctionnement exclusivement en courant continu, l'un des deux électrolytes circulant dans n'importe quelle direction autour de la section du film déviateur, renfermée à l'extrémité de la bobine par les sections du film membranaire.

14. Procédé de génération de courant électrique à partir de substances actives par oxydoréduction dissoutes dans des fluides, où un premier fluide est introduit dans un premier canal d'écoulement d'un module enroulé de batterie à flux d'oxydoréduction et un deuxième fluide est introduit dans un deuxième canal d'écoulement du module enroulé de batterie à flux d'oxydoréduction se trouvant dans une batterie à flux d'oxydoréduction réalisée selon l'une des revendications précédentes, le premier fluide et le deuxième fluide traversant le module à flux d'oxydoréduction selon un principe de courant continu ou de contre-courant.

15. Procédé selon la revendication 14, où le premier canal d'écoulement du module à flux d'oxydoréduction est délimité au moins par zones, c'est-à-dire uniquement à l'intérieur d'une zone sélectionnée, sur un premier côté par un film membranaire échangeur d'ions et sur un deuxième côté par un premier film déviateur électroconducteur, et où le deuxième canal d'écoulement est délimité au moins par zones sur un premier côté par un deuxième film déviateur électroconducteur et sur un deuxième côté par le film membranaire échangeur d'ions, un écarteur étant disposé dans le premier canal d'écoulement et/ou dans le deuxième canal d'écoulement.

**Fig.1**

Fig. 2

Fig. 3

Fig. 4

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 000003317001 A1


**In der Beschreibung aufgeführte Nicht-Patentliteratur**

- **TOBIAS JANOSCHKA ; NORBERT MARTIN ; UDO MARTIN ; CHRISTIAN FRIEBE ; SABINE MORGENSTERN ; HANNES HILLER ; MARTIN D. HAGER ; ULRICH S. SCHUBERT.** An aqueous, polymer-based redox-flow battery using non-corrosive, safe, and low-cost materials. *Nature,* 2015, vol. 527, 78-81